(19) Europäisches Patentamt
European Patent Office
Office européen des brevets

(11) **EP 2 102 294 B1**

(12) **EUROPÄISCHE PATENTSCHRIFT**

(45) Veröffentlichungstag und Bekanntmachung des Hinweises auf die Patenterteilung:
**20.06.2012 Patentblatt 2012/25**

(21) Anmeldenummer: **07866256.6**

(22) Anmeldetag: **21.12.2007**

(51) Int Cl.:
***C09C 1/64*** *(2006.01)*

(86) Internationale Anmeldenummer:
**PCT/EP2007/011349**

(87) Internationale Veröffentlichungsnummer:
**WO 2008/077612 (03.07.2008 Gazette 2008/27)**

(54) **DÜNNE ALUMINIUMPIGMENTE MIT ENGER DICKENVERTEILUNG, VERFAHREN ZUR HERSTELLUNG DERSELBEN UND VERWENDUNG DER ALUMINIUMPIGMENTE**

THIN ALUMINIUM PIGMENTS HAVING A NARROW THICKNESS DISTRIBUTION, METHOD FOR PRODUCING SAME, AND USE OF ALUMINIUM PIGMENTS

PIGMENTS D'ALUMINIUM FINS AYANT UNE PLAGE DE RÉPARTITION D'ÉPAISSEUR ÉTROITE, LEUR PROCÉDÉ DE RÉALISATION ET LEUR UTILISATION

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **22.12.2006 DE 102006062271**

(43) Veröffentlichungstag der Anmeldung:
**23.09.2009 Patentblatt 2009/39**

(73) Patentinhaber: **Eckart GmbH**
**91235 Hartenstein (DE)**

(72) Erfinder:
• **TRUMMER, Stefan**
**90480 Nürnberg (DE)**

• **BECKER, Michael**
**91207 Lauf (DE)**
• **SCHLEGL, Thomas**
**91245 Simmelsdorf (DE)**

(74) Vertreter: **Walcher, Armin**
**Louis, Pöhlau, Lohrentz & Segeth**
**Postfach 3055**
**90014 Nürnberg (DE)**

(56) Entgegenhaltungen:
**EP-A- 1 621 586          WO-A-2004/087816**
**WO-A-2005/118722**

## Beschreibung

Die Erfindung betrifft dünne plättchenförmige Aluminiumpigmente mit enger Dickenverteilung sowie ein Verfahren zur Herstellung derselben. Die Erfindung betrifft weiterhin Verwendungen dieser Aluminiumpigmente.

Plättchenförmige Aluminiumpigmente sind Effektpigmente und zeichnen sich durch ihr einzigartiges metallisches Aussehen und ihre hohe Deckkraft aus. Aufgrund der plättchenförmigen Struktur dieser Effektpigmente orientieren sie sich im Anwendungsmedium parallel zum Substrat und bewirken durch eine Kombination vieler einzelner Spiegelchen einen metallischen Effekt. Dieser metallische Effekt ist insbesondere in Naßlacken sehr stark ausgeprägt. Dabei handelt es sich bei Volltonlackierungen um einen vom Beobachtungs- und/oder Einfallswinkel abhängigen Helligkeitseffekt, der auch als "Flop" bezeichnet wird. Ein guter Flop wird von vielen Eigenschaften der Pigmente beeinflußt: so spielen ihre Orientierung, ihre Größe und Größenverteilung, ihre Oberflächentextur (Rauheit) und die Kantentextur eine wichtige Rolle.

Die treibende Kraft für eine planparallele Orientierung der Pigmente, die auch als Flakes bezeichnet werden, ist - neben grenzflächenchemischen Unverträglichkeiten der Aluminiumpigmente zum Bindemittelsystem - vor allem der Formfaktor der Pigmente. Unter dem Formfaktor versteht man das Verhältnis von Längsausdehnung d zur Dicke h der Pigmente. Die Längsausdehnung wird vor allem anhand von Laserbeugungsmethoden bestimmt. Dabei wird in der Regel der $d_{50}$-Wert der Summendurchgangskurve herangezogen.

Da die Längsausdehnung der Aluminiumpigmente stark vom jeweiligen Anwendungszweck abhängig ist, kann ein hoher Formfaktor und damit eine möglichst gute Orientierung vor allem über die Dicke der Pigmente erreicht werden. Dünne Pigmente orientieren sich besser und haben daher auch einen höheren Flop. Eine weitere wichtige Eigenschaft metallischer Coatings oder Druckfarben ist ihr hoher Glanz. Glanz ist u. a. auch eine physiologisch und psychologisch bedingte Größe, jedoch läßt sich nach der DIN 67 530 das "Glanzvermögen" einer ebenen Oberfläche durch Reflektometerwerte erfassen. Gemessen wird die Reflexion im Glanzwinkel bezogen auf einen Standard (i. d. R. eine schwarze Spiegelglasplatte).

Nach dieser Norm werden hochglänzende Proben (Reflektometerwert > 70) unter einem Einfall- bzw. Abstrahlwinkel von 20° und mittelglänzende Oberflächen bei 60° gemessen. Voraussetzung für einen guten Glanz von metallischen Coatings oder Druckfarben ist ebenfalls eine möglichst gute planparallele Orientierung der plättchenförmigen Pigmente im Anwendungsmedium.

Die brillantesten Aluminiumpigmente mit höchstem Glanz und Flop sind derzeit zwei generellen Klassen zuzuordnen: zum einen den sogenannten "Silberdollarpigmenten", die durch Naßvermahlung von Aluminiumgrieß hergestellt werden, und zum anderen den sogenannten "PVD-Pigmenten".

Bei PVD-Pigmenten werden extrem dünne Al-Pigmente mit mittleren Dicken von ca. 20 bis 60 nm hergestellt. Die Dickenverteilung dieser Pigmente ist äußerst gering. Bei diesem Verfahren wird Aluminium im Ultrahochvakuum auf eine mit einem Ablösefilm ("release-coat") versehene Trägerfolie aufgedampft. Bei diesem Ablösefilm handelt es sich in der Regel um Polymere. Anschließend wird das aufgedampfte Aluminium - soweit möglich - in einem Lösemittel von der Trägerfolie getrennt und die Metallfolie mechanisch oder durch Ultraschall zerkleinert. Die Herstellung von PVD-Pigmenten ist beispielsweise in J. Seubert und A. Fetz, "PVD Aluminium Pigments: Superior Brillance for Coatings and Graphic Arts", Coatings Journal, Bd. 84, A6 225264, Juli 2001, Seiten 240-245 beschrieben.

Diese PVD-Pigmente weisen aufgrund ihrer extremen Dünnheit ein hervorragendes Deckvermögen auf. Die dünnen Pigmente sind so flexibel, daß sie sich regelrecht an ihrem Untergrund "anschmiegen". Daher sollten sie zur Entfaltung ihrer optischen Möglichkeiten auf einem glatten Untergrund appliziert werden.

Einen besonderen Effekt erhält man bei der sogenannten "Rückseitenapplikation" im Druckbereich. Hier wird eine transparente Folie mit einer die PVD-Pigmente enthaltende Druckfarbe bedruckt. Betrachtet man nach Härtung der Druckfarbe die Folie durch die nicht bedruckte Rückseite, so nimmt man einen Metallglanz war, der nahezu einem Spiegel gleicht. Bevorzugte Anwendungen dieser Applikationsform sind Scheinwerferrückblenden.

Nachteilig bei diesen PVD-Pigmenten sind jedoch die äußerst hohen Herstellungskosten. Weiterhin ist von Nachteil, dass der relase-coat kaum vollständig von den Pigmentteilchen entfernt werden kann. Dieser anhaftende Polymerfilm kann jedoch zu Nachteilen führen. So können in einer Druckfarbe Unverträglichkeiten zum Lösemittel der Druckfarbe auftreten. Beispielsweise können Polymerfilme, die für Toluol geeignet sind, in Lösemitteln wie Alkoholen oder Wasser unverträglich sein. Dies macht sich in der Ausbildung von Agglomeraten bemerkbar, die den gewünschten dekorativen Effekt völlig zunichte machen.

Insbesondere jedoch können derartige polymere Anhaftungen nachteilig stören, wenn man die Aluminiumpigmente nach ihrer Herstellung mit chemischen Schutzüberzügen, wie sie beispielsweise in der DE 196 35 085 beschrieben sind, versieht, um sie korrosionsbeständig zu machen.

Gleiches gilt für eine Stabilisierung durch Korrosionsschutzmittel, wie beispielsweise aus DE 100 01 437 bekannt. Hier führen Reste von anhaftendem release-coat unter Umständen zu einer ungleichmäßigen Schutzbeschichtung und erschweren die Aufbringung einer reproduzierbar herstellbaren Schutzschicht.

Insbesondere der Einsatz von derartig beschichteten Substraten in Wasserlacken, in denen unstabilisierte Aluminiumpigmente eine unerwünschte Gasung durch Wasserstoffentwicklung hervorrufen, ist mit derart vorbelegten Substraten nur schwer reproduzierbar erreichbar.

Ein weiterer gravierender Nachteil der PVD-Pigmente ist ihre äußerst starke Agglomerationsneigung. Aus diesem Grunde werden PVD-Pigmente nur in hochverdünnten Dispersionen mit üblicherweise 10 bis 20 Gew.-% Aluminiumpigmentanteil angeboten. Im Hinblick auf eine einfachere Handhabung ist es wünschenswert, Präparationen mit höherem Aluminiumpigmentanteil zu haben. Silberdollarpigmente zeichnen sich im Vergleich zu Metallpigmenten aus der Zerkleinerungsmahlung durch relativ runde Form und relativ glatte Oberfläche aus.

In der US 4,318,747 werden feine Aluminiumeffektpigmente mit einer durchschnittlichen Größe von weniger als 5 $\mu$m mit leafing-Charakter offenbart, die einen Spreitwert von mindestens 50.000 $cm^2$/g sowie eine spezifische Oberfläche, gemessen nach der BET-Methode, von 24 $m^2$/g bis 93 $m^2$/g besitzen. Aus diesen Angaben können Rauwerte im Bereich von 2,4 bis 9,3 berechnet werden. Aufgrund der großen Rauheit der Oberfläche dieser Pigmente kommt es zu einer starken Streuung von eingestrahltem Licht und mithin zu einem verringerten Glanz, verglichen mit der glatten Oberfläche eines PVD-Pigments.

Die EP 1 621 586 A1 offenbart durch Naßmahlung erhaltene Aluminiumeffektpigmente im Dickenbereich der PVD-Pigmente mit einer mittleren Dicke von 25 bis 80 nm und einer mittleren Größe von 8 bis 30 $\mu$m. Diese Pigmente weisen jedoch nachteiligerweise nicht die optischen Eigenschaften von PVD-Pigmenten auf.

Schließlich betrifft EP 1 080 810 B1 ein Aluminiumpigment, welches durch Nassvermahlung von Aluminiumstaub hergestellt wurde. Der auch als Verdüsungsprodukt zur Pigmentherstellung eingesetzte, eine mittlere Teilchengröße von 2-10 $\mu$m aufweisende Aluminiumstaub ist nicht näher beschrieben.

Die EP 1 424 371 A1 offenbart durch Vermahlung von Aluminiumpulver erhaltene Aluminiumeffektpigmente. Gemäß der Lehre der EP 1 424 371 A1 weist das eingesetzte Aluminiumpulver eine durchschnittliche Partikelgröße ($D_{50}$) im Bereich von 1 bis 10 $\mu$m auf.

Nachteiligerweise weisen diese Pigmente gemäß der EP 1 621 586 A1, EP 1 080 810 B1 und der EP 1424 371 A1 eine sehr breite relative Dickenverteilung auf, was zu Qualitätseinbußen in Bezug auf die Glanzeigenschaften eines unter Verwendung dieser Pigmente lackierten oder bedruckten Gegenstandes führt.

Aus der DE 103 15 775 A1 sind dünne deckende Aluminiumeffektpigmente mit einer mittleren Dicke von 30 bis 100 nm und einer relativen Dickenverteilung von 70% bis 140% bekannt, die eine sehr hohe Deckkraft und aufgrund ihrer sehr glatten Oberfläche einen PVD-Pigmenten ähnlichen Glanz aufweisen. In ihren optischen Eigenschaften stellen sie hinsichtlich Deckkraft, Glanz und Flop eine deutliche Verbesserung zu herkömmlichen Silberdollarpigmenten dar. Es hat sich jedoch gezeigt, dass die aus der DE 103 15 775 A1 bekannten Aluminiumpigmente insbesondere in Druckfarben manchmal ein unzureichendes Transferverhalten aufweisen.

Die WO 2005/118722 A1 betrifft eine wässrige Beschichtungszusammensetzung, die mit wenigstens einer anorganischen Korrosionsschutzschicht versehene Aluminiumpigmente enthält, wobei die Dicke der mit wenigstens einer Korrosionsschutzschicht versehenen Aluminiumpigmente im Mittel weniger als 160 nm beträgt.

Aufgabe der vorliegenden Erfindung ist es, sehr dünne Aluminiumeffektpigmente ohne anhaftenden Polymerfilm mit ausgezeichneter Deckkraft, hohem Glanz und, verglichen mit den aus der Naßvermahlung erhaltenen im Stand der Technik bekannten Aluminiumeffektpigmenten, einem verbesserten metallischen Aussehen bereitzustellen.

Eine weitere Aufgabe ist es, Aluminiumeffektpigmente bereitzustellen, die zudem über ein gutes Transferverhalten beim Verdrucken einer diese Aluminiumeffektpigmente enthaltenden Druckfarbe aufweisen. Die Aluminiumeffektpigmente sollen insbesondere in Druckfarben in ihren optischen Eigenschaften den PVD-Pigmenten möglichst nahe kommen und dennoch anwendungstechnisch besser als letztere verarbeitbar sein. Insbesondere sollen die Aluminiumpigmente, verglichen mit PVD-Pigmenten, eine deutlich verringerte Agglomerationsneigung aufweisen.

Weiterhin sollen derartige Pigmente in einem - im Vergleich zur aufwendigen Herstellung von Aluminiumeffektpigmenten in PVD-Verfahren - kostengünstigen Verfahren hergestellt werden können.

Die Aufgabe wird gelöst durch die Bereitstellung von plättchenförmigen Aluminiumpigmenten, welche

a) eine über Dickenauszählung mit Rasterelektronenmikroskopie ermittelte mittlere Dicke $h_{50}$ von 15 bis 75 nm,

b) eine über Dickenauszählung mit Rasterelektronenmikroskopie ermittelte relative Breite der Dickenverteilung $\Delta h$, welche anhand der entsprechenden Summendurchgangskurve der relativen Häufigkeiten nach der Formel $\Delta h = 100 \times (h_{90}-h_{10}) / h_{50}$, berechnet wird, von 30 % bis weniger als 70% und

c) ein Röntgendiffraktogramm, welches an Pigmenten in im wesentlichen planparalleler Anordnung gemessen wurde, mit ein oder zwei Hauptpeaks, die nicht den [111]-Reflexen entsprechen, aufweisen.

Bevorzugte Weiterbildungen der erfindungsgemäßen Aluminiumeffektpigmente sind in den Unteransprüchen 2 bis 7 angegeben.

Die der Erfindung zugrunde liegende Aufgabe wird weiterhin durch ein Verfahren gemäß Anspruch 8 zur Herstellung von Aluminiumeffektpigmenten nach einem der Ansprüche 1 bis 7, gelöst, dass es folgende Schritte umfasst:

a) Bereitstellen eines Aluminiumgrießes mit einer Korngrößenverteilung, welche einen $d_{10} < 3{,}0$ $\mu$m, einen $d_{50} < 5{,}0$ $\mu$m und einen $d_{90} < 8{,}0$ $\mu$m aufweist,

b) Vermahlen des Aluminiumgrießes unter a) unter Verwendung eines Mahlwerks in Gegenwart von Lösemittel und Schmierstoffen und Mahlkörpern, die ein Einzelgewicht von 2 bis 13 mg aufweisen, für eine Mahldauer von 15 bis 100 h.

Bevorzugte Weiterbildungen des Verfahrens sind in den Unteransprüchen 9 bis 10 angegeben.

Die erfindungsgemäße Aufgabe wird ferner durch die Verwendung der Aluminiumeffektpigmente gemäß einem der Ansprüche 11 bis 14 sowie einer die Aluminiumeffektpigmente enthaltenden UV-stabilen Druckfarbe gemäß Anspruch 15 gelöst.

Die erfindungsgemäßen plättchenförmigen Aluminiumpigmente bzw. Aluminiumeffektpigmente werden nachfolgend aus Gründen der einfacheren Bezeichnung auch als Aluminiumpigmente bezeichnet.

Die Erfindung betrifft plättchenförmige Aluminiumpigmente, welche

a) eine über Dickenauszählung mit Rasterelektronenmikroskopie ermittelte mittlere Dicke $h_{50}$ von 15 bis 75 nm,
b) eine über Dickenauszählung mit Rasterelektronenmikroskopie ermittelte relative Breite der Dickenverteilung $\Delta h$, welche anhand der entsprechenden Summendurchgangskurve der relativen Häufigkeiten nach der Formel $\Delta h = 100 \times (h_{90} - h_{10}) / h_{50}$, berechnet wird, von 30 % bis weniger als 70% und
c) ein Röntgendiffraktogramm, welches an Pigmenten in im wesentlichen planparalleler Anordnung gemessen wurde, mit ein oder zwei Hauptpeaks, die nicht den [111]-Reflexen entsprechen, aufweisen.

Die erfindungsgemäßen Aluminiumpigmente besitzen aufgrund ihrer sehr geringen mittleren Dicke eine sehr hohe Deckkraft. Als Deckkraft oder Deckvermögen eines Pigmentes wird üblicherweise die Abdeckung einer Fläche pro Gewichtseinheit an Pigmentmenge bezeichnet. Je dünner die mittlere Dicke der Aluminiumpigmente ist, desto größer ist die durch das Pigment abgedeckte Fläche und mithin die Deckkraft des Aluminiumpigmentes.

Äußerst vorteilhaft stapeln sich dünne Pigmente mit einer engen Dickenverteilung gleichmäßiger im Anwendungsmedium als herkömmliche Aluminiumpigmente mit einer breiten Dickenverteilung. Bei den herkömmlichen Aluminiumpigmenten kann es leicht zu Ungleichmäßigkeiten in der Stapelung der Pigmente kommen. So können insbesondere sehr dicke Pigmente als "Abstandshalter" wirken, welche die Orientierung der umgebenden bzw. benachbart liegenden Pigmente beeinträchtigt. Hiervon werden Glanz, Flop und unter Umständen das Deckvermögen nachteilig betroffen. Dies wirkt sich insbesondere nachteilig in Drucken aus. Drucke haben im Vergleich zu Lackbeschichtungen (Coatings) eine wesentlich geringere Dicke und ein geringerem Bindemittelanteil.

Die erfindungsgemäßen, sehr dünnen Aluminiumpigmente mit enger Dickenverteilung weisen in überraschender Weise eine PVD-Pigmenten ähnliche, enge Dickenverteilung auf und ähneln daher in ihren optischen Eigenschaften diesen Pigmenten, sind jedoch wesentlicher einfacher und kostengünstiger als PVD-Pigmente herzustellen.

Die Bestimmung der exakten mittleren Dicke von plättchenförmigen Metallpigmenten ist schwierig. In der Praxis erfolgt die Pigmentdickenbestimmung über den Wasserbedeckungsgrad (Spreitung, DIN 55923) und/oder durch die Rasterelektronenmikroskopie (REM). Mit dem Wasserbedeckungsgrad lässt sich lediglich eine mittlere Dicke h der Pigmente berechnen, nicht aber die Dickenverteilung. Die Wasserbedeckungsgradmethode versagt bei PVD-Pigmenten, die über eine außerordentlich hohe Agglomerationsneigung verfügen. Bei der Präparation zur Spreitung müssen die Pigmente zwischenzeitlich ausgetrocknet werden, was im Fall von PVD-Pigmenten zu irreversiblen Agglomerationserscheinungen führt. Daher wurde im Rahmen dieser Erfindung die mittlere Dicke der erfindungsgemäßen Aluminiumpigmente mittels Rasterelektronenmikroskopie (REM) bestimmt. Bei dieser Methode sind so viele Teilchen zu vermessen, dass eine repräsentative statistische Auswertung vorgenommen werden kann. Üblicherweise werden etwa 100 Teilchen vermessen.

Die Dickenverteilung wird zweckmäßigerweise in Form einer Summendurchgangskurve dargestellt. Als Mittelwert bietet sich der $h_{50}$-Wert der Dickensummendurchgangskurve an. Ein Maß für die Breite der Verteilung $\Delta h$, auch Span genannt, wird durch die folgende Formel angegeben:

$$\Delta h(\%) = 100 * \frac{h_{90} - h_{10}}{h_{50}}$$

(I)

wobei sich die Indizes auf den jeweiligen Wert der Summendurchgangsverteilung beziehen.

Bei der aus dem Ergebnis der Dickenauszählung mit Rasterelektronenmikroskopie ($h_{50}$-Wert der Summendurchgangsverteilung) berechneten mittleren Dicke $h_{50}$ der erfindungsgemäßen Aluminiumpigmente wurde eine mittlere Dicke $h_{50}$ von 15 bis 75 nm, bevorzugt von 18 bis 70 nm, besonders bevorzugt von 25 bis 60 nm und ganz besonders bevorzugt von 30 bis 55 nm ermittelt.

Unterhalb einer mittleren Dicke von 15 nm werden die Pigmente zu dunkel, was auf den Verlust des metallischen Reflexionsvermögens unter Beibehaltung der hohen Absorptionseigenschaften des Aluminiums zurückzuführen ist. Außerdem werden die mechanischen Eigenschaften des Aluminiums in ungünstiger Weise verändert: die Pigmente werden zu brüchig. Oberhalb einer mittleren Dicke von 75 nm werden die vorteilhaften optischen Eigenschaften zunehmend beeinträchtigt. Bis zu einer mittleren Dicke von 75 nm kommt es jedoch zu keiner merklichen Beeinträchtigung.

Die erfindungsgemäßen Pigmente weisen vorzugsweise eine relative Breite der Dickenverteilung $\Delta h$ von 30 % bis 70%, bevorzugt von 35 % bis 67 %, weiter bevorzugt von 40 % bis 65 % und besonders bevorzugt von 40 % bis 60 % auf.

Oberhalb eines $\Delta h$ von 70 % waren die vorteilhaften Eigenschaften der Aluminiumpigmente nicht mehr zu beobachten. Insbesondere der hohe, mit demjenigen von PVD-Pigmente vergleichbare, Glanz von sogenannten "Rückseitenapplikationen" konnte nicht mehr festgestellt werden. Ferner weisen diese Pigmente mit einem $\Delta h$ von mehr als 70 % beim Bedrucken teilweise Probleme im Transferverhalten auf. Pigmente mit einer relativen Breite der Dickenverteilung $\Delta h$ von unter 30 % konnten bislang nicht hergestellt werden.

Bei einer weiteren bevorzugten Ausführungsform weisen die erfindungsgemäßen Aluminiumpigmente eine mittlere Dicke $h_{50}$ von 25 bis 60 nm und einen Span $\Delta h$ von 35 % bis 67 % auf. Eine weitere besonders bevorzugte Ausführungsform der erfindungsgemäßen Aluminiumpigmente ist durch eine mittlere Dicke $h_{50}$ von 25 bis 55 nm und einen Span $\Delta h$ von 35 % bis 65 % charakterisiert.

Die erfindungsgemäßen Aluminiumpigmente unterscheiden sich in signifikanter Weise in ihrem röntgendiffraktometrischen Verhalten von den herkömmlichen PVD-Pigmenten. Um Proben plättchenförmiger Aluminiumpigmente mittels der Röntgendiffraktometrie (XRD, X-ray Reflection Diffraction) zu untersuchen, werden die Pigmente zuvor im wesentlich planparallel zum Probenuntergrund orientiert. Als Gerät eignet sich im Prinzip jedes kommerziell erhältliche Röntgendiffraktometer.

Unter im wesentlichen planparalleler Anordnung wird im Sinne der Erfindung verstanden, daß mindestens 80 % der Pigmente innerhalb eines Toleranzbereiches von +/- 15° zur Untergrundparallele vorhanden sind.

Man stellt fest, dass PVD-Pigmente stets einen Hauptpeak beim Reflex der [111]-Ebene aufweisen. Unter einer [111]-Ebene werden die Millerschen Indizes verstanden. Die [111]-Ebene entspricht der dichtest möglichen Ebene eines kubischflächenzentriert kristallisierenden Metalls. Dieses Ergebnis ist an sich bekannt, da man weiß, dass auf eine Folie aufgesputtertes Aluminium entsprechende Kristalle bildet. Überraschenderweise stellt man jedoch fest, dass die erfindungsgemäßen Aluminiumpigmente keinen Hauptpeak beim Reflex der [111]-Ebene aufweisen. Der Reflex der [111]-Ebene ist, wenn überhaupt vorhanden, stets schwach. Der oder möglicherweise die Hauptpeaks entsprechen bevorzugt den Reflexen der [200]-und/oder der [220]-Ebenen. Besonders bevorzugt entspricht der Hauptpeak der [200]-Ebene.

Im Gegensatz zu PVD-Pigmenten ist bei den erfindungsgemäßen Pigmenten das Intensitätsverhältnis [111]/[200] stets < 1. Bevorzugt ist dieses Verhältnis < 0,5 und besonders bevorzugt < 0,1.

Es wird vermutet, dass durch diese Eigenschaften der plastische Verformungszustand, in dem sich die Aluminiumpigmente während des Vermahlvorgangs befinden, widergespiegelt wird. Der zumindest polykristalline Aluminiumgrieß wird während der Verformungsmahlung starken Scherkräften ausgesetzt. Es findet eine Scherung einzelner Kristallite gegeneinander statt, wobei offenbar die dichtest gepackte [111]-Ebene die Scherebene ist. Da die Vermahlung naturgemäß senkrecht zur Plättchenoberfläche stattfindet, werden diese Ebenen aus der Plättchenebene weggebrochen, was anhand der abnehmenden Peakintensität im Diffraktogramm erkennbar ist. Gleichzeitig werden die Peaks der [200]- und der [220]- Ebenen intensiviert.

Völlig überraschend wurde festgestellt, dass die erfindungsgemäßen Aluminiumpigmente in "Rückseitenapplikationen" einen metallischen Glanz besitzen, der bei herkömmlichen, durch Nassvermahlung erzeugten Aluminiumpigmenten bisher nicht erreicht worden ist, sondern nur bei PVD-Pigmenten.

Unter einer Rückseitenapplikation wird verstanden, dass eine mit Metalleffektpigmenten pigmentierte Druckfarbe auf eine transparente Folie aufgedruckt wird. Betrachtet man den ausgehärteten Druck durch die Folienseite, so stellt man bei Verwendung von PVD-Pigmenten einen nahezu spiegelartigen Effekt fest. Die PVD-Pigmente schmiegen sich aufgrund ihrer geringen Dicke und ihrer geringen Dickenverteilung engstens an die Folie an. Überraschenderweise kann ein ähnlicher Effekt mittels der erfindungsgemäßen Aluminiumpigmente erreicht werden. Die geringe Pigmentgesamtdicke und die geringe Breite der Dickenverteilung sind vermutlich die ursächlichen Faktoren für das Auftreten dieses Effektes.

Ferner ist als treibende Kraft für eine planparallele Orientierung der Pigmente, neben der grenzflächenchemischen Unverträglichkeit der Aluminiumpigmente zum Bindemittelsystem, der Formfaktor ein weiteres wichtiges Charakteristikum für die Eigenschaften der erfindungsgemäßen plättchenförmiger Aluminiumpigmente.

Unter dem Formfaktor f versteht man das Verhältnis des Mittelwertes der Längsausdehnung zur mittleren Dicke der Aluminiumpigmentplättchen.

Die Längsausdehnung d (Durchmesser) wird in Laserbeugungsexperimenten auf Grundlage der Fraunhofer- und/oder der Miebeugungstheorie bestimmt. Der Auswertung der Beugungsdaten liegt ein Modell zugrunde, welches auf den Durchmesser einer Äquivalentkugel abzielt. Daher werden keine Absolutwerte erhalten, jedoch haben sich die gemessenen Durchmesser als verlässliche Relativwerte in der Beschreibung der Größencharakteristik von plättchenförmigen Metallpigmenten durchgesetzt.

In der Längsausdehnung unterscheiden sich die erfindungsgemäßen Aluminiumpigmente nicht grundsätzlich von konventionell auf dem Markt befindlichen Aluminiumpigmenten, die durch Nassmahlung hergestellt werden. Im Einzelnen hängen die Größen vom Einsatzzweck ab.

Die $d_{50}$-Werte der Längenverteilung der Pigmente liegen bevorzugt oberhalb von 3 $\mu$m, weiter bevorzugt in einem Bereich von 4 $\mu$m bis 50 $\mu$m, vorzugsweise von 5 $\mu$m bis 45 $\mu$m, weiter bevorzugt von 8 $\mu$m bis 40 $\mu$m, weiter bevorzugt von 10 $\mu$m bis 30 $\mu$m, noch weiter bevorzugt von 15 $\mu$m bis 25 $\mu$m.

Weiterhin sind bevorzugt feine Pigmente im Größenbereich 3 bis 15 $\mu$m und besonders bevorzugt 5 bis 12 $\mu$m. Derartige Pigmente weisen zudem bevorzugt non-leafing Eigenschaften auf. Sie sind beispielsweise mit Ölsäure als Schmiermittel vermahlen und daher mit dieser Substanz beschichtet. Derartige Pigmente sind insbesondere für Rückseitenapplikationen im Druckbereich geeignet.

Der dimensionslose Formfaktor f in dieser Erfindung ist definiert als:

$$f = 1000 * \frac{d_{50}(\mu m)}{h_{50(nm)}} \qquad\qquad (II)$$

Der $d_{50}$ -Wert der Pigmentlänge entspricht dabei 50% der

Durchgangssummenverteilungskurve, gemessen und ausgewertet in Form einer Volumenverteilung von Äqui- valentkugeln. Der Mittelwert $h_{50}$ der Dickenverteilung wird wie oben beschrieben bestimmt.

Die erfindungsgemäßen Pigmente zeichnen sich durch einen Formfaktor f von 200 bis etwa 1.500 aus. Bevorzugt besitzen die erfindungsgemäßen Pigmente einen Formfaktorf von 210 bis 1.000, weiter bevorzugt von 220 bis 500 und besonders bevorzugt 230 bis 400.

Charakteristisch für die erfindungsgemäßen Pigmente ist weiterhin ein vergleichsweise niedriger Gehalt an aktivem Aluminium. Der Gehalt an aktivem Aluminium wird bestimmt, indem eine definierte Menge Aluminiumpigmente in einer alkalischen Lösung vollständig aufgelöst wird und der entstehende Wasserstoff volumetrisch unter temperierten Bedingungen erfasst wird. Der aktive Aluminiumgehalt liegt bei diesen Pigmenten im Bereich von 80 bis 92 Gew.-%, bevorzugt von 85 bis 90 Gew.-%, bezogen auf das Gesamtgewicht der Aluminiumpigmente. Diese Werte liegen unterhalb der Werte von herkömmlichen Aluminiumpigmenten aus der Nassmahlung mit einem Gehalt an aktivem Aluminium von 93 bis 97 Gew.-%.

Der Restgehalt im Pigment an nichtaktivem Aluminium lässt sich dem natürlicherweise an der Oberfläche entstehenden Aluminiumoxid sowie auf der Oberfläche gebundenen Fettsäuren zuordnen. Aufgrund der sehr geringen Dicke der erfindungsgemäßen Aluminiumpigmente besitzen diese einen vergleichsweise hohen relativen Oxidgehalt. Auch der Gehalt an Fettsäuren ist vergleichsweise hoch. Dieser ist anhand des C-Gehaltes aus der Elementaranalyse grob abschätzbar. Er beträgt bei den erfindungsgemäßen Pigmenten anhand von zuvor mit Aceton oder vergleichbaren Lösemitteln gewaschenen und anschließend getrockneten Aluminiumpulvern typischerweise 0,3 bis 1,2 Gew.-%, bevorzugt 0,4 bis 1,0 Gew.-%.

Bei den erfindungsgemäßen Aluminiumpigmenten handelt es sich um sehr dünne Pigmente mit einer sehr engen Dickenverteilung. Derartige Pigmente besitzen eine hohe Deckkraft. Die erfindungsgemäßen Aluminiumpigmente weisen vorzugsweise eine Dickenverteilung mit einem $h_{90}$ - Wert von unter 110 nm, bevorzugt von unter 100 nm und besonders bevorzugt von unter 75 auf. Weiterhin besitzen die erfindungsgemäßen Aluminiumpigmente vorzugsweise eine Dickenverteilung mit einem $h_{95}$ - Wert von unter 150 nm, vorzugsweise von unter 120 nm und weiterhin bevorzugt unter 100 nm. Der $h_{99}$ - Wert der Dickenverteilung der erfindungsgemäßen Aluminiumpigmente ist vorzugsweise unter 140 nm, weiter vorzugsweise unter 110 nm und besonders bevorzugt unter 90 nm.

Bei diesen sehr engen Dickenverteilungen treten kaum Pigmentplättchen mit einer Dicke von wesentlich über 100 nm auf.

Die enge Dickenverteilung bewirkt vorteilhaft eine sehr gute Stapelung der erfindungsgemäßen Aluminiumpigmente in einem Anwendungsmedium, beispielsweise einem Lack oder einer Druckfarbe. Mit den erfindungsgemäßen Aluminiumpigmenten können beispielsweise deckende Lackierungen mit sehr geringen Schichtdicken, beispielsweise einer Schichtdicke von weniger als 10 $\mu$m, mit einem sehr hohen Glanz und einem sehr guten Flop hergestellt werden.

Insbesondere in der Automobillackierung besteht vorwiegend aus Kosteneinsparungsgründen ein Bedürfnis nach geringeren Schichtdicken. Bislang liegen Basislackschichtdicken in einem Bereich von etwa 15 μm. Bereits jetzt werden an sehr gebogenen Formkörpern wie beispielsweise Türklinken standardmäßig auch geringere Schichtdicken verwendet. Es wäre wünschenswert, wenn niedrige Schichtdicken von weniger 10 μm verwirklicht werden könnten. Allerdings darf die Schichtdicke nicht zu niedrig sein, da andernfalls Haftungs-, Deckungs- und/oder Pigmentierungsprobleme entstehen.

Im Fall von Druckfarben sind die Bindemittelanteile und die Schichtdicken generell sehr viel niedriger als in Lacken. Dies trifft vor allem für Tiefdruckfarben zu. Mit konventionellen Aluminiumpigmenten pigmentierte Tiefdruckfarben weisen einen Festkörpergehalt von ca. 40 Gew.-% auf. Druckfilme hieraus weisen eine Nassfilmschichtdicke von ca. 3 bis 6 μm und eine Trockenfilmschichtdicke von ca. 1,5 bis 3 μm auf. Im Fall von mit PVD-Pigmenten pigmentierten Tiefdruckfarben liegen die Festkörperanteile bei ca.15 bis 20 Gew.-% der gesamten Tiefdruckfarbe. Damit gehen Trockenfilmschichtdicken von nur 0,5 bis 1,5 μm einher. Bei diesen äußerst geringen Schichtdicken ist insbesondere in der Rückseitenapplikation ist eine weitgehend gleichförmige planparallele Orientierung der Metallpigmente nötig. Diese konnte bisher nur durch PVD-Pigmente erreicht werden. Die erfindungsgemäßen Metallpigmente aus der Nassmahlung weisen eine ähnliche mittlere Teilchendicke sowie eine ähnliche Teilchendickenverteilung auf. Nur derartige Pigmente, die bisher nicht zugänglich waren, können einen mit PVD-Pigmenten vergleichbaren optischen Effekt in der Rückseitenapplikation aufweisen. Es sind mit den erfindungsgemäßen Metallpigmenten praktisch keine Unterschiede in der optischen Qualität zu PVD-Pigmente in Tiefdruckanwendungen festzustellen.

Bei einer weiteren erfindungsgemäßen Ausführungsform werden die erfindungsgemäßen Aluminiumpigmente nachträglich mit einem passivierenden Inhibitor und/oder einer passivierenden Korrosionsschutzschicht belegt bzw. beschichtet. Derartige Beschichtungen ermöglichen erst den sicheren Einsatz der erfindungsgemäßen Pigmente in Wasserlacken und/oder in Außenanwendungen. Der Wirkungsmechanismus der Passivierungsschichten ist komplex. Bei Inhibitoren beruht er zumeist auf sterischen Effekten. Der größte Teil der Inhibitoren hat daher auch eine orientierende Wirkung im Sinne von "leafing" und "non-leafing", d.h. im Anwendungsmedium aufschwimmend bzw. nicht aufschwimmend.

Die Inhibitoren werden üblicherweise in niedrigen Konzentrationen in der Größenordnung von 0,5 Gew.-% bis 15 Gew.%, bezogen auf das Gewicht des eingesetzten Aluminiumpigmentes, zugegeben.

Für die Inhibierung kommen vorzugsweise in Frage:

- Organisch modifizierte Phosphonsäuren bzw. deren Ester der allgemeinen Formel $R\text{-}P(O)(OR_1)(OR_2)$, wobei: $R$ = Alkyl, Aryl, Alkyl-aryl, Aryl-alkyl sowie Alkylether, insbesondere ethoxylierte Alkylether und $R_1$, $R_2$ = H, $C_nH_{2n+1}$, mit n = 1-6 ist, wobei Alkyl jeweils verzweigt oder unverzweigt sein kann. $R_1$ kann gleich oder unterschiedlich zu $R_2$ sein.

- Organisch modifizierte Phosphorsäuren und -ester der allgemeinen Formel $R\text{-}O\text{-}P(OR_1)(OR_2)$ mit $R$ = Alkyl, Aryl, Alkyl-aryl, Aryl-alkyl sowie von Alkylether, insbesondere ethoxylierte Alkylether und $R_1$, $R_2$ = H, $C_nH_{2n+1}$, mit n = 1-6 ist, wobei Alkyl jeweils verzweigt oder unverzweigt sein kann.

Verwendet werden können reine Phosphonsäuren oder -ester oder Phosphorsäuren oder -ester oder beliebige Mischungen derselben.

Im Falle einer Vermahlung des Aluminiumgriesses in einem überwiegend wässrigen Lösemittel werden derartige Inhibitoren als Mahlhilfsmittel verwendet, um einer sicherheitstechnisch gefährlichen Wasserstoffentstehung während des Mahlvorganges vorzubeugen.

Weiterhin kann die passivierende Inhibitorschicht aus korrosionsinhibierenden organisch funktionalisierten Silanen, aliphatischen oder cyclischen Aminen, aliphatischen oder aromatischen Nitroverbindungen, Sauerstoff-, Schwefel und/oder Stickstoff enthaltenden Heterocyclen wie beispielsweise Thioharnstoffderivaten, Schwefel und/oder Stickstoffverbindungen höherer Ketone, Aldehyden und Alkoholen, beispielsweise Fettalkoholen, oder Thiolen, oder Gemischen derselben bestehen oder diese umfassen. Die passivierende Inhibitorschicht kann aber auch aus den vorgenannten Substanzen bestehen. Bevorzugt sind organische Phosphonsäuren, Phosphorsäureester oder deren Gemische. Bei Verwendung von Aminverbindungen weisen diese bevorzugt organische Reste mit mehr als 6 C-Atomen auf. Bevorzugt werden derartige Amine zusammen mit organischen Phosphonsäuren und/oder Phosphorsäureester oder deren Gemische eingesetzt.

Die Passivierung über Korrosionsschutzbarrieren mit chemischer und physikalischer Schutzwirkung ist auf vielfältige Weise realisierbar.

Passivierende Korrosionsschutzschichten, die den Aluminiumpigmenten einen besonders guten Korrosionsschutz gewährleisten, umfassen oder bestehen aus Siliciumoxid, bevorzugt Siliciumdioxid, Chromaluminiumoxid, das vorzugsweise durch Chromatierverfahren aufgebracht wird, Zirkoniumoxid, Aluminiumoxid, polymerisierte Kunststoffharze, Phosphat, Phosphit oder Borat oder Mischungen derselben.

Bevorzugt sind Siliciumdioxidschichten und Chromaluminiumoxidschichten (Chromatierung). Weiterhin bevorzugt sind Aluminiumoxid, -hydroxid oder oxidhydratschichten, wie sie in der DE 195 20 312 A1 beschrieben werden.

Die $SiO_2$-Schichten werden bevorzugt durch Sol-Gel-Verfahren mit durchschnittlichen Schichtdicken von 10 - 150 nm und bevorzugt von 15 - 40 nm in organischen Lösemitteln aufgebracht.

Im Folgenden wird das Verfahren zur Herstellung der erfindungsgemäßen Aluminiumpigmente dargestellt. Dieses zeichnet sich durch eine äußerst schonende Verformungsmahlung von Aluminiumgrieß aus. Im Einzelnen umfasst das Verfahren folgende Schritte:

a) Bereitstellen eines Aluminiumgrießes mit einer Korngrößenverteilung, welche einen $d_{10}$ < 3,0 $\mu$m, einen $d_{50}$ < 5,0 $\mu$m und einen $d_{90}$ < 8,0 $\mu$m aufweist,

b) Vermahlen des Aluminiumgrießes unter a) unter Verwendung eines Mahlwerks in Gegenwart von Lösemittel und Schmierstoffen und Mahlkörpern, die ein Einzelgewicht von 2 bis 13 mg aufweisen, für eine Mahldauer von 15 bis 100 h.

Der Aluminiumgrieß wird bevorzugt in "Atomizern" durch Verdüsung von flüssigem Aluminium, vorzugsweise einer Aluminiumschmelze, hergestellt. Der Grieß umfaßt oder besteht aus Aluminiumpartikeln mit einer vorzugsweise weitgehend runden Form. Besonders bevorzugt werden Aluminiumgriesse mit Aluminiumpartikeln in einer kugelförmigen bis leicht ellipsoiden Form verwendet. Der nach Verdüsung einer Aluminiumschmelze erhaltene Aluminiumgrieß wird gemäß einer bevorzugten Variante klassiert, um die gewünschte Korngrößenverteilung, die auch als Kornband bezeichnet werden kann, zu erhalten.

Der Aluminiumgrieß ist ein sehr feiner Metallgrieß mit einer sehr engen Größenverteilung. Das Kornband der Größenverteilung wird in üblicher Weise durch Laserbeugungsspektrometrie ermittelt, wobei aus der Laserlichtbeugung die Partikelgröße ermittelt werden kann. Die Laserbeugungsspektrometrie kann dabei beispielsweise mit dem Gerät Helos der Firma Sympatec GmbH, Clausthal-Zellerfeld, Deutschland, gemäß Herstellerangaben durchgeführt werden.

Die Größenverteilung weist einen $d_{Grieß,10}$ < 3,0 $\mu$m, einen $d_{Grieß,50}$ < 5,0 $\mu$m und einen $d_{Grieß,90}$ < 8,0 $\mu$m auf. Bevorzugt umfasst die Größenverteilung einen $d_{Grieß,10}$ < 0,6 $\mu$m, einen $d_{Grieß,50}$ < 2,0 $\mu$m und einen $d_{Grieß,90}$ < 4,0 $\mu$m.

Der Grieß kann nach dem Verdüsungsschritt durch entsprechende Klassierungsschritte auf die gewünschte schmale Größenverteilung gebracht werden. Die Klassierung kann mit Windsichtern, Zyklonen und anderen bekannten Einrichtungen durchgeführt werden.

Nur mit derartig feinen und relativ eng geschnittenen Aluminiumgrießen können die erfindungsgemäßen Aluminiumpigmente hergestellt werden. Als Untergrenze weist die Größenverteilung folgende Kenndaten auf: $d_{Grieß,10}$ > 0,15 $\mu$m, $d_{Grieß,50}$ > 0,8 $\mu$m und $d_{Grieß,90}$ > 2,0 $\mu$m. Der verwendete Aluminiumgrieß ist mithin überwiegend kein Aluminiumgrieß in nanometrischen Dimensionen.

Weiter bevorzugt sind Aluminiumgriesse mit einem $d_{Grieß,50}$-Wertebereich von 0,9 bis 3,0 $\mu$m und noch weiter bevorzugt von 0,95 bis 2,5 $\mu$m.

Diese bevorzugt verwendeten Aluminiumgriesse weisen bevorzugt einen Span ihrer Größenverteilung, der in üblicher Weise als $\Delta d_{Grieß} = (d_{Grieß,90} - d_{Grieß,10})/ d_{Grieß,50}$ definiert ist, von 30 % bis 200 % und weiter bevorzugt von 40 % - 180 % und ganz besonders bevorzugt von 50 % bis 170 % auf.

Die Verwendung eines derartig feinen Aluminiumgrießes mit enger Größenverteilung ist von essentieller Bedeutung für die Herstellung der erfindungsgemäßen Metallpigmente. Während der Verformungsmahlung werden die Aluminiumgrießpartikel nicht völlig gleichmäßig verformt: dies bedeutet, dass einige Partikel stärker verformt werden, während ein Teil der Grießpartikel erst sehr spät während der Vermahlung verformt werden. Ein Grund hierfür ist auch die Tatsache, dass die Verformungswahrscheinlichkeit einer Partikel von seiner Größe abhängt. So besitzen bereits zu Plättchen vorverformte Partikel eine höhere spezifische Fläche als noch unverformter Grieß und demgemäß eine höhere Wahrscheinlichkeit, weiter verformt zu werden. Die Breite der Größenverteilung des Grießes geht somit nicht nur in die Größenverteilung der daraus geformte Aluminiumplättchen ein, sondern auch in die Verteilung der Dickenverteilung. Für schmale Dickenverteilungen muß daher ein Aluminiumgrieß mit entsprechend geringer Größenvarianz verwendet werden.

Der zur Herstellung der erfindungsgemäßen plättchenförmigen Aluminiumpigmente verwendete Aluminiumgrieß weist weiterhin einen sehr geringen Oxidgehalt auf. Der Gehalt an Aluminiumoxid im Aluminiumgrieß wird durch Aufschmelzen des Aluminiumgrießes mit Kohlenstoff und Bestimmung des dabei entstehenden Kohlenmonoxids mittels eines handelsüblichen Gerätes (z.B. Omat 3500 der Fa. JUWE GmbH) bestimmt. Der Gehalt an Aluminiumoxid im Aluminiumgrieß beträgt weniger als 5 Gew.-%, bevorzugt weniger 1,5 Gew.-% und besonders bevorzugt weniger 1,0 Gew.-% bezogen auf den Aluminiumgrieß.

Um diese geringen Oxidgehalte zu erreichen wird der Verdüsungsschritt bevorzugt unter Inertgasatmosphäre durchgeführt. Als Inertgase werden vorzugsweise Stickstoff und/oder Helium eingesetzt.

Die Reinheit des bei der Verdüsung verwendeten Aluminiums beträgt vorzugsweise 99,0 bis über 99,9 Gew.-%. Der Grieß kann in entsprechend geringen Mengen die üblichen Legierungsbestandteile (z.B. Mg, Si, Fe) enthalten.

Der Aluminiumgrieß wird unter Verwendung eines Mahlwerks, vorzugsweise einer Kugelmühle oder einer Rührwerkskugelmühle, in Gegenwart von Lösemittel und Schmierstoffen als Mahlhilfsmittel und von Mahlkörpern, die ein Einzelgewicht von 1,2 bis 13 mg aufweisen, vermahlen. Aufgrund der äußerst schonenden Mahlweise dauert diese Mahlung vergleichsweise lang. Die Mahldauer beträgt 15 bis 100 h, bevorzugt 16 bis 80 h und besonders bevorzugt 17 bis 70 h.

Gemäß einer bevorzugten Weiterbildung der Erfindung weisen die Mahlkörper ein Einzelgewicht von 2,0 bis 12,5 mg und besonders bevorzugt von 5,0 bis 12,0 mg auf. Als Mahlkörper werden vorzugsweise sphärische Körper, weiter bevorzugt Kugeln verwendet.

Bevorzugt sind Kugeln mit sehr glatter Oberfläche, möglichst runder Form und weitgehend einheitlicher Größe. Das Kugelmaterial kann aus Stahl, Glas oder Keramik, wie z.B. Zirkoniumoxid oder Korund sein. Die Temperaturen während des Mahlvorganges liegen im Bereich von 10°C bis 70 °C. Bevorzugt sind Temperaturen in einem Bereich von 25°C bis 45 °C.

Besonders bevorzugt sind Kugeln aus Glas und einem mittleren Einzelgewicht von 2,0 bis 12,5 mg.

Weiterhin sind bevorzugt sind Kugeln aus Stahl und einem mittleren Einzelgewicht von 1,2 bis 4,5 mg und besonders bevorzugt einem mittleren Einzelgewicht von 1,4 bis 4,0 mg sowie weiterhin besonders bevorzugt einem mittleren Einzelgewicht von 2,0 bis 3,5 mg.

Die langen Mahlzeiten führen zu einer Vielzahl von Pigment-Kugel-Stößen. Dadurch wird das Pigment sehr gleichmäßig ausgeformt, wodurch eine sehr glatte Oberfläche und eine sehr enge Dickenverteilung ausgebildet ist.

Bezogen auf die Vermahlung in einer Kugelmühle ist die kritische Drehzahl $n_{krit}$ ein wichtiger Parameter, der angibt, ab wann die Kugeln durch die Zentrifugalkräfte an die Mühlenwand gepresst werden und praktisch keine Mahlung mehr stattfindet:

$$n_{krit} = \sqrt{\frac{g}{2\pi^2} \cdot \frac{1}{D}}$$

wobei D der Trommeldurchmesser
und g die Gravitationskonstante ist.

Die Umdrehungsgeschwindigkeiten der Kugelmühle betragen vorzugsweise 25% bis 68%, weiter vorzugsweise 28 % bis 60 % und besonders bevorzugt 30 % bis unter 50 % und weiterhin besonders bevorzugt 35 % bis 45 % der kritischen Drehzahl $n_{krit}$.

Niedrige Umdrehungsgeschwindigkeiten begünstigen eine langsame Verformung des Aluminiumgriesses. Um eine langsame Verformung zu bewirken, werden bei dem erfindungsgemäßen Verfahren bevorzugt auch leichte Mahlkugeln verwendet. Mahlkugeln mit einem Einzelgewicht über 13 mg verformen den Aluminiumgrieß zu stark, was zu vorzeitigem Bruch führt.

Im Unterschied zu herkömmlichen Mahlverfahren wird der Aluminiumgrieß bei dem erfindungsgemäßen Verfahren zum überwiegenden Anteil nicht vermahlen bzw. zerkleinert, sondern äußerst schonend über einen längeren Zeitraum verformt.

Die Vermahlung mit sehr leichten Kugeln in Verbindung mit geringen Drehzahlen und einer langen Vermahldauer führt zu einer äußerst schonenden Vermahlung, bei der sehr dünne Aluminiumpigmente erhalten werden. Da der eingesetzte Aluminiumgrieß eine sehr enge Korngrößenverteilung aufweist, weisen auch die erfindungsgemäßen Aluminiumeffektpigmente eine sehr einheitliche Dickenverteilung auf.

Die Mahlung kann in einem Lösemittel bei einem Gewichtsverhältnis von Lösemittel zu Aluminiumgrieß von 2,5 bis 10 und bei einem Gewichtsverhältnis der Mahlkugeln zu Aluminiumgrieß von 20 - 110 und mit Schmierstoffen als Mahlhilfsmittel stattfinden.

Als Schmierstoffe können während der Vermahlung eine Vielzahl von Verbindungen verwendet werden.

Hierbei sind die schon seit langer Zeit verwendeten Fettsäuren mit Alkylresten von 10 bis 24 C-Atomen zu nennen. Vorzugsweise werden Stearinsäure, Ölsäure oder Mischungen derselben verwendet. Dabei führt Stearinsäure als Schmiermittel zu leafing-Pigmenten, Ölsäure hingegen zu non-leafing-Pigmenten. Leafing-Pigmente sind dadurch gekennzeichnet, daß sie in einem Anwendungsmedium, beispielsweise einem Lack oder eine Druckfarbe aufschwimmen, d.h. sich an der Oberfläche des Anwendungsmediums anordnen. Non-leafing-Pigmente ordnen sich hingegen im Anwendungsmedium an. Den Fettsäuren können zusätzlich beispielsweise langkettige Aminoverbindungen zugesetzt werden. Die Fettsäuren können tierischen oder auch pflanzlichen Ursprungs sein. Ebenfalls können organische Phosphonsäuren und/oder Phosphorsäureester als Schmiermittel verwendet werden.

Das Schmiermittel sollte nicht in zu geringer Menge eingesetzt werden, da anderenfalls infolge der starken Ausformung des Aluminiumgriesses die sehr großen Oberflächen der hergestellten plättchenartigen Aluminiumpigmente nur ungenügend durch adsorbiertes Schmiermittel abgesättigt werden. In diesem Fall kommt es zu Kaltverschweißungen.

Typische Mengen sind daher 1 bis 20 Gew.-%, bevorzugt 4 bis 18 Gew.-% und besonders bevorzugt 8 bis 15 Gew.-% Schmiermittel bezogen auf das eingesetzte Aluminiumgewicht.

Die Wahl des Lösemittels ist an sich unkritisch. Man kann übliche Lösemittel wie Testbenzin, Solvent Naphtha etc. einsetzen. Auch die Verwendung von Alkoholen, wie z.B. Isopropanol, Ether, Ketone, Ester usw. ist möglich.

Ebenfalls kann Wasser (im zumindest überwiegenden Teil) als Lösemittel verwendet werden. In diesem Fall sollten die eingesetzten Schmiermittel allerdings deutlich korrosionsinhibierende Wirkung haben. Bevorzugt sind hier Phosphonsäuren und/oder Phosphorsäureester, die auch ethoxylierte Seitenketten tragen können. Auch die Zugabe von Korrosionsinhibitoren während der Mahlung ist hier vorteilhaft.

Bedingt durch das erfindungsgemäße Herstellungsverfahren sind die Aluminiumpigmente äußerst vorteilhaft frei von anhaftenden Polymerfolien. Daher besitzen diese nicht die Nachteile von noch mit Resten des "release-coats" behafteter Aluminiumpigmente, die durch PVD-Verfahren hergestellt werden. Zudem ist ihre Herstellungsweise billiger als bei der aufwendigen PVD-Herstellung. Die Trennung der hergestellten Aluminiumpigmente von den Mahlkörpern, vorzugsweise Mahlkugeln, kann auf herkömmliche Art und Weise durch Siebung erfolgen.

Nach der Vermahlung des Aluminiumgrieß werden die erhaltenen Aluminiumpigmente von den Mahlkörpern, vorzugsweise den Mahlkugeln, abgetrennt.

In einem weiteren Verfahrensschritt können die erhaltenen Aluminiumpigmente einer Größenklassifikation unterzogen werden. Diese Klassifikation sollte schonend durchgeführt werden, um die dünnen Aluminiumpigmente nicht zu zerstören. Es kann sich dabei beispielsweise um eine Nasssiebung, eine Dekantierung oder auch einer Trennung durch Sedimentation, beispielsweise infolge der Schwerkraft oder durch Zentrifugieren, handeln. Bei der Nasssiebung wird i. d. R. der Grobanteil herausgesiebt. Bei den anderen Verfahren kann insbesondere der Feinstanteil abgetrennt werden. Anschließend wird die Suspension von überschüssigem Lösemittel getrennt, z.B. mit Hilfe einer Filterpresse, Zentrifuge und/oder eines Filter.

Im letzten Schritt erfolgt sodann eine Weiterverarbeitung zur gewünschten Darreichungsform.

Obwohl die erfindungsgemäßen Metallpigmente im Vergleich zu PVD-Pigmenten eine ähnliche Dicke und eine ähnliche Dickenverteilung aufweisen, sind sie überraschenderweise wesentlich einfacher handhabbar. In ihren Angebotsformen sind die erfindungsgemäßen Aluminiumpigmente vorteilhafterweise nicht auf die bei PVD-Pigmenten übliche niedrig konzentrierte Dispersionsform beschränkt.

So kann man analog zu konventionellen Aluminiumpigmenten die Pastenform wählen. Der Festkörpergehalt beträgt hierbei 30 bis 65 Gew.-%, bevorzugt 40 bis 60 Gew.-% und besonders bevorzugt 45 bis 55 Gew.-% bezogen auf das Gesamtgewicht der Paste.

Weiterhin können die erfindungsgemäßen Aluminiumpigmente durch Austrocknen in eine Pulverform, vorzugsweise in eine nichtstaubende Pulverform, überführt werden. Das getrocknete Pulver kann durch Zugabe sehr kleiner Mengen Lösemittel, beispielsweise von 1 Gew.-% bis weniger als 10 Gew.-%, wie zum Beispiel von 3 bis 5 Gew.-%, bezogen auf das Gesamtgewicht an Pulver und Lösemittel, in einem geeigneten Homogenisator zu einem nicht staubenden Metallpulver weiterverarbeitet werden. Auch kann der Filterkuchen zunächst ausgetrocknet und anschließend mit einem anderen Lösemittel wieder angepastet werden (Umnetzen).

Überraschenderweise können die Aluminiumpigmente aber auch durch Versetzen des Filterkuchens mit einer geeigneten Dispersion eines geeigneten Harzes zu einem Granulat, zu Pellets, Briketts, Tabletten oder Würstchen überführt werden. Diese Darreichungsformen besitzen die Vorteile, dass sie nicht stauben, eine leichte Dosierbarkeit aufweisen und hervorragend dispergierbar sind.

Die Pelletierung kann auf einem Pelletierteller auf herkömmliche Art und Weise durchgeführt werden. Das Tablettieren kann in einer Tablettiervorrichtung erfolgen. Die Würstchen können durch ein Pressverfahren aus Aluminiumpaste oder -pulver hergestellt werden oder indem eine Aluminiumpaste durch einen Extruder extrudiert wird und die extrudierten Pastenstränge durch eine umlaufende Messeranordnung zerteilt werden. Ein Granulieren der erfindungsgemäßen Aluminiumpigmente kann beispielsweise durch Sprühgranulieren erfolgen.

Die erfindungsgemäßen Aluminiumpigmente können äußerst vorteilhaft in Granulaten oder Pellets mit hohen Aluminiumpigmentgehalten, beispielsweise von 90 Gew.-% bis 35 Gew.-%, vorzugsweise von 70 Gew.-% bis 40 Gew.-%, bereitgestellt werden.

Aufgrund der recht hohen spezifischen Oberfläche der erfindungsgemäßen Aluminiumpigmente werden beispielsweise zur Pelletierung der erfindungsgemäßen Aluminiumpigmente relativ große Mengen an Dispergierharz verwendet. Vorzugsweise werden 2 - 50 Gew.-%, weiter bevorzugt 5 bis 30 Gew.-%, Harz, bezogen auf die Gesamtformulierung der Pellets verwendet.

Zur Pelletierung kann eine Vielzahl von Dispergierharzen verwendet werden. Beispiele hierfür sind sowohl natürlich vorkommende wie auch synthetische Harze. Sie umfassen beispielsweise Alkydharze, Carboxymethyl- und Carboxyethylcelluloseharze, Cellulose Acetat, Cellulose Acetat Propionat (CAP) und Cellulose Acetat Butyrat (CAB), Cumarol-Indenharze, Epoxidester, Epoxid-Melamin und Epoxid-Phenol-Kondensate, Ethyl- und Methylcellulose, Ethylhydroxyethylcellulose, Hydroxyethylcellulose, Hydroxypropylmethylcellulose, Keton- und Maleinsäureharze, Kolophoniumharze, Melaminharze, Nitrocelluloseharze, Phenol- und modifizierte Phenolharze, Polyacrylamid-, Polycarbonat-, Polyamid-, Polyester-, Polyether-, Polyurethan-, und Vinylharze.

Unter diesen polymeren Harzen sind insbesondere zu erwähnen: acrylatische Copolymere und Acrylesterharze, Polyacrylonitril- und Acrylonitrilcopolymerharze, Copolymere aus Butadien und Vinylidenchloride, Butadien/Styrol Copolymere, Methylacrylat- und Methylmethacrylatcopolymere; sowie Polybuten-, Polyisobutylen-, Polyvinylacetat-, Polyvinylakohol-, Polyvinylchlorid-, Polyvinylether-, Polyvinylpyrrolidon- und Polstyrolharze. Weitere Copolymere beinhalten Styrol/Maleinsäureanhydrid- und Styrol/Schellackharze, Vinyl-chlorid/Vinylacetat-, VinylchloridNinylether- und Vinylchlorid/Vinylidenchloridharze.

Ferner kommen natürlich vorkommende Harze wie Gummi Arabicum, Gutta Percha, Casein und Gelatine in Betracht.

Bevorzugt sind Aldehydharze wie die der Laropalserie der BASF AG, Ludwigshafen. Weiterhin kommen Wachse als Bindermaterialien in Frage: Hier sind als Beispiele natürliche Wachse wie Bienenwachs, Candelilla-, Carnauba-, Montan- sowie Parafinwachse zu nennen. Ebenso kommen synthetische Wachse wie beispielsweise PE-Wachse in Betracht.

Die vorgenannten Präparationen lassen sich beispielsweise in Lacksysteme oder Druckfarben sehr gut einarbeiten, ohne dass es zu unerwünschten Agglomerationen von Aluminiumpigmenten kommt.

Es hat sich überraschend herausgestellt, dass die Agglomerationsneigung der erfindungsgemäßen Aluminiumpigmente deutlich geringer ist als die von PVD-Pigmenten.

Es wird vermutet, dass dieser Effekt mit der Rauheit der erfindungsgemäßen Aluminiumpigmente verbunden ist. Die erfindungsgemäßen Aluminiumpigmente weisen aufgrund des Herstellungsverfahrens ein gewisses Maß an Rauheit bzw. Welligkeit auf, die eine planparallele Anlagerung, d.h. eine Agglomeration von Aluminiumpigmenten aneinander verhindert, ohne dass es überraschenderweise zu einer wesentlichen Beeinträchtigung der optischen Eigenschaften, wie Reflexionsvermögen und Glanz, der erfindungsgemäßen Aluminiumpigmente kommt.

Im Unterschied zu PVD-Pigmenten weisen die übereinander gelagerten erfindungsgemäßen Aluminiumpigmente aufgrund der Rauheit bzw. Welligkeit nur punktförmige Kontaktflächen zueinander auf. Dadurch wird - im Unterschied zu PVD-Pigmenten - die Ausbildung kurzreichender Anziehungskräfte wie van der Waals-Kräfte oder Wasserstoffbrücken minimiert und mithin eine Agglomeration oder Aggregation erschwert.

Die erfindungsgemäßen Aluminiumpigmente finden Verwendung in Coatings, Lacken, Druckfarben, Pulverlacken, Kunststoffen und kosmetischen Formulierungen. Vorzugsweise werden die erfindungsgemäßen Aluminiumpigmente in Druckfarben und in Nagellackformulierungen verwendet. Die erfindungsgemäßen Druckfarben, Nagellacke bzw. Coatings besitzen ein ausgeprägtes metallisches Aussehen mit dem Eindruck eines flüssigen Metalls.

Besonders bevorzugt finden die erfindungsgemäßen Aluminiumpigmente in Druckfarben Verwendung. Ganz besonders finden die erfindungsgemäßen Aluminiumpigmente in Tiefdruck-, Sieb- oder Flexodruckfarben Verwendung

Die durch nachträgliche Beschichtungen passivierten erfindungsgemäßen Aluminiumpigmente finden bevorzugt Verwendung in Wasserlacken und Außenanwendungen.

Ein weiterer Gegenstand der Erfindung ist eine die erfindungsgemäßen Metallpigmente enthaltende Druckfarbe, im speziellen eine Flüssig-Druckfarbe wie Tief-, Flexo- oder Siebdruckfarbe.

Derartige Tief-, Flexo- oder Siebdruckfarben enthalten Lösemittel bzw. Lösemittelgemische. Diese dienen u.a. zum Lösen der Bindemittel, aber auch zur Einstellung wichtiger Anwendungseigenschaften der Druckfarben, wie beispielsweise der Viskosität oder der Trocknungsgeschwindigkeit.

Für Flüssig-Druckfarben wie Flexo- und Tiefdruckfarben eingesetzte Lösemittel umfassen insbesondere niedrig siedende Lösemittel. Der Siedepunkt beträgt im

Regelfalle nicht mehr als 140°C. Höher siedende Lösemittel werden nur in kleineren Mengen zur Einstellung der Trocknungsgeschwindigkeit eingesetzt. Siebdruckfarben sind ähnlich formuliert wie Flexo- oder Tiefdruckfarben, sie sind lediglich etwas höher viskos eingestellt und weisen üblicherweise Lösemittel mit etwas höheren Siedepunkten auf. Beispiele geeigneter Lösemittel für Flüssigdruckfarben umfassen Ethanol, 1-Propanol oder 2-Propanol, substituierte Alkohole wie beispielsweise Ethoxypropanol oder Ester wie beispielsweise Ethylacetat, Isopropylacetat, n-Propyloder n-Butylacetat. Es können selbstverständlich auch Gemische verschiedener Lösemittel eingesetzt werden. Beispielsweise kann es sich um ein Gemisch aus Ethanol und Estern wie Ethylacetat oder Propylacetat handeln. Für das Drucken mit Flexodruckplatten ist es regelmäßig empfehlenswert, dass der Anteil der Ester am Gesamtlösemittel ca. 20 - 25 Gew.-% nicht überschreitet. Als Lösemittel für Flüssigdruckfarben sind bevorzugt auch Wasser oder überwiegend wässrige Lösemittelgemische einsetzbar.

Je nach Art der Druckfarbe werden üblicherweise 10 bis 60 Gew.-% Lösemittel bezüglich der Summe aller Bestandteile eingesetzt. Im Fall der erfindungsgemäßen Druckfarben erweist sich jedoch ein Bereich von 60 - 80 Gew.-% Lösemittel als besonders vorteilhaft.

Strahlungshärtbare Druckfarben enthalten im allgemeinen nicht die oben genannten Lösemittel, sondern Reaktiwerdünner. Reaktiwerdünner erfüllen typischerweise eine Doppelfunktion. Einerseits dienen sie zum Vernetzen bzw. Härten der Druckfarbe, andererseits dienen sie aber auch wie konventionelle Lösemittel (DE 20 2004 005 921 UI 2004.07.1 zum Einstellen der Viskosität. Beispiele umfassen Beispiele umfassen Butylacrylat, (2-Ethylhexyl)acrylat, sowie insbesondere mehrfunktionelle Acrylate wie 1 ,4-Butandioldi(meth)acrylat, 1 ,6-Hexandioldi(meth)acrylat oder Trimethylolpropantri(meth)acrylat.

Als Bindemittel für die erfindungsgemäßen Metallic-Druckfarben können prinzipiell die für Flüssig-Druckfarben üblichen Bindemittel eingesetzt werden. Je nach dem gewünschten Anwendungszweck und den gewünschten Eigenschaften trifft der Fachmann eine geeignete Auswahl. Beispiele geeigneter Bindemittel umfassen Polyester, Polyamide, PVC-Copolymerisate, aliphatische und aromatische Ketonharze, Melamin-Harnstoff-Harze, Melamin-Formaldehyd-Harze, Maleinate, Kolophoniumderivate, Oase- in bzw. Casein-Derivate, Ethylcellulose, Nitrocellulose oder aromatische bzw. aliphatische Polyurethane. Es können auch Polymere oder Copolymere von Vinylacetat, Vinylalkohol, Acrylaten, Methacrylaten, Vinylpyrrolidon oder Vinylacetalen eingesetzt werden. Von besonderem Vorteil können funktionelle Gruppen aufweisende hyperverzweigte Polymere, beispielsweise hyperverzweigte Polyurethane, Polyharnstoffe oder Polyesteramide eingesetzt werden, wie von WO 02/36695 und WO 02/36697 offenbart. Es können selbstverständlich auch Gemische verschiedener polymerer Bindemittel eingesetzt werden, vorausgesetzt, die ausgewählten Bindemittel weisen in Kombination miteinander keine unerwünschten Eigenschaften auf. Die Menge aller Bindemittel beträgt üblicherweise 5 — 40 Gew.-% bzgl. der Summe aller Bestandteile der Druckfarbe.

Besonders bevorzugte Bindemittel umfassen beispielsweise Nitrocellulose, Ethylcellulose, Hydroxyethylcellulose, Acrylate, Polyvinylbutyrale sowie aliphatische und aromatische Polyurethane und Polyharnstoffe, insbesondere hyperverzweigte Polyurethane und Polyharnstoffe sowie Mischungen davon.

Als Bindemittel für wasserverdünnbare Metallic-Druckfarben kommen insbesondere Copolymere auf Basis von (Meth)acrylsäure und/oder deren Estern mit Styrol in Frage. Derartige Bindemittel sind als Lösungen oder Dispersionen für den Einsatz in Druckfarben beispielsweise unter dem Namen Zinpol® (Fa. Worlee) kommerziell erhältlich. Weitere Beispiele umfassen aromatische bzw. aliphatische wässrige Polyurethane, Polyester und auf wässrige Polyamide.

Für pastöse Druckfarben bevorzugte Bindemittel umfassen beispielsweise Kolophoniumharze oder modifizierte Kolophoniumharze. Beispiele für modifizierte Kolophoniumharze umfassen mit Polyolen wie beispielsweise Glycerin oder Pentaerythrit ganz oder teilweise veresterte Kolophoniumharze.

Strahlungshärtbare Druckfarben umfassen Bindemittel, die vernetzbare Gruppen umfassen, wie beispielsweise olefinische Gruppen, Vinylether- oder Epoxidgruppen. Hier liegt die Summe der Bindemittel (inklusive Reaktiwerdünner) in der Regel in einem Bereich von 30 - 90 Gew.-% aller Bestandteile der Druckfarbe.

Die erfindungsgemäßen Metallic-Druckfarben können weiterhin einen oder mehrere Hilfsstoffe beziehungsweise Additive umfassen. Beispiele für Additive und Hilfsstoffe sind Füllstoffe wie Calciumcarbonat, Aluminiumoxidhydrat oder Aluminium- bzw. Magnesiumsilikat. Wachse erhöhen die Abriebfestigkeit und dienen der Erhöhung der Gleitfähigkeit. Beispiele sind insbesondere Polyethylenwachse, oxidierte Polyethylenwachse, Petroleumwachse oder Ceresinwachse. Fettsäureamide können zur Erhöhung der Oberflächenglätte eingesetzt werden. Weichmacher dienen der Erhöhung der Elastizität des getrockneten Films. Für strahlungshärtbare Druckfarben wird als Additiv weiterhin mindestens ein Fotoinitiator oder ein Fotoinitiatorsystem eingesetzt. Zum Dispergieren der Effektpigmente können Dispergierhilfsmittel eingesetzt werden. Mittels Fettsäuren kann ein Aufschwimmen der Effektpigmente in der gedruckten Schicht erreicht werden, so dass die Pigmente in an der oberen Grenzfläche der Druckschicht angereichert sind. Hierdurch können vorteilhaft verbesserte Metallic-Effekte erzielt werden. Weiterhin können auch Antiabsetzmittel zugesetzt werden. Derartige Zusätze verhindern die Sedimentation der Effektpigmente. Beispiele umfassen Kieselsäure, Cellulose-Derivate oder auch Wachse.

Zur Formulierung der besonders bevorzugten dünnflüssigen Flexo-, Tief- oder Siebdruckfarben ist der Zusatz von Antiabsetzmitteln meist empfehlenswert, wenngleich nicht immer unbedingt erforderlich. Die Gesamtmenge aller Additive und Hilfsstoffe sollte üblicherweise 20 Gew.-% bezüglich der Summe aller Bestandteile der Druckfarbe nicht übersteigen und beträgt bevorzugt 0,1 —10 Gew.-%.

Die Herstellung der erfindungsgemäßen Metallic-Druckfarben kann in prinzipiell bekannter Art und Weise durch intensives Vermischen bzw. Dispergieren der Bestandteile in üblichen Apparaturen wie beispielsweise Dissolvern oder Rührwerken erfolgen. Der Fachmann wird beim Einsatz von Dissolvern darauf achten, dass der Energieeintrag nicht zu hoch ist, um ein Beschädigen der erfindungsgemäßen Metalleffektpigmente zu vermeiden. Umgekehrt muss er natürlich so hoch sein, um ein ordnungsgemäßes Dispergieren der Pigmente zu ermöglichen. Falls neben den erfindungsgemäßen Metalleffektpigmenten noch übliche Farbpigmente eingesetzt werden, kann es empfehlenswert sein, diese in einem Teil oder in der Gesamtmenge des Lösemittels, Bindemittels sowie gegebenenfalls der Hilfsstoffe der Metallic-Druckfarbe vorzudispergieren, und die erfindungsgemäßen Metalleffektpigmente erst später zuzugeben. Auf diese Art und Weise wird eine besonders gute Dispergierung der zusätzlichen Pigmente erreicht, ohne die Metalleffektpigmente durch zu starke Dispergierung zu schädigen. Anstelle der Pigmente können auch vordispergierte Pigmentkonzentrate zugegeben werden. Ganz besonders elegant kann hierbei auch eine handelsübliche Druckfarbe in geringen Mengen eingesetzt werden, vorausgesetzt, die zugesetzte Druckfarbe ist mit der Rezeptur der Metallic-Druckfarbe verträglich und verschlechtert nicht deren Eigenschaften.

Die folgenden Beispiele erläutern die Erfindung, ohne sie einzuschränken.

**Beispiel 1:**

a) <u>Verdüsung</u>:

In einem Induktionstiegelofen (Fa. Induga, Ofeninhalt ca. 2,5 to) werden Aluminiumbarren kontinuierlich eingebracht und aufgeschmolzen. Im sogenannten Vorherd liegt die Aluminiumschmelze bei einer Temperatur von etwa 720 °C flüssig vor. Mehrere Düsen, die nach einem Injektorprinzip arbeiten, tauchen in die Schmelze ein und verdüsen die Aluminiumschmelze vertikal nach oben. Das Verdüsungsgas wird in Kompressoren (Fa. Kaeser) bis auf 20 bar verdichtet und in Gaserhitzern bis auf etwa 700 °C erhitzt. Der entstehende Aluminiumgrieß erstarrt und erkaltet im Fluge. Der Induktionsofen ist in eine geschlossene Anlage integriert. Die Verdüsung erfolgt unter Inertgas (Stickstoff). Die Abscheidung des Aluminiumgrieß erfolgt zuerst in einem Zyklon, wobei der dort abgeschiedene pulverförmige Aluminiumgrieß einen $d_{50}$ von 14-17 $\mu$m aufweist. Zur weiteren Abscheidung dient in Folge ein Multizyklon, wobei der in diesem abgeschiedene pulverförmige Aluminiumgrieß einen $d_{50}$ von 2,3-2,8 $\mu$m aufweist. Die Gas-Feststoff-Trennung erfolgt in einem Filter (Fa. Alpine) mit Metallelementen (Fa. Pall). Hierbei wird als feinste Fraktion ein Aluminiumgrieß mit einem $d_{10}$ von 0,7 $\mu$m, einem $d_{50}$ von 1,9 $\mu$m und einem $d_{90}$ von 3,8 $\mu$m gewonnen.

b) <u>Vermahlung</u>:

In einer Topfmühle (Länge: 32 cm, Breite: 19 cm) werden 4 kg Glaskugeln (Durchmesser: 2 mm), 75 g feinster Aluminiumgrieß aus a), 200 g Testbenzin und 3,75 g Ölsäure aufgegeben. Anschließend wird 15 h lang bei 58 U/min vermahlen. Das Produkt wird durch Spülen mit Testbenzin von den Mahlkugeln getrennt und anschließend in einer Nasssiebung auf einem 25 $\mu$m-Sieb durchgesiebt. Das Feinkorn wird über einer Nutsche weitgehend von Testbenzin befreit und anschließend mit Testbenzin in einem Labormischer angepastet (ca. 50 % Feststoffanteil).

**Beispiel 2:**

a) Aluminiumgrieß:

Verwendet wurde ein Aluminiumgrieß, der gemäß Beispiel 1 hergestellt wurde. Der Grieß weisst folgende Kennzahlen seiner Größenverteilungskurve auf:
$d_{10,Grieß}$ = 0,7 $\mu$m; $d_{50,Grieß}$ = 1,6 $\mu$m; $d_{90,Grieß}$ = 3,2 $\mu$m.

b) <u>Vermahlung</u>:

In einer Topfmühle (Länge: 32 cm, Breite: 19 cm) werden 4,7 kg Glaskugeln (Durchmesser: 2,0 mm), 67 g feinster Aluminiumgrieß aus 2a), 200 g Testbenzin und 10 g Ölsäure aufgegeben. Anschließend wird 22 h lang bei 43 U/min vermahlen. Das Produkt wird durch Spülen mit Testbenzin von den Mahlkugeln getrennt und anschließend in einer Nasssiebung auf einem 25 $\mu$m-Sieb durchgesiebt. Das Feinkorn wird über einer Nutsche weitgehend von Testbenzin befreit und anschließend mit Testbenzin in einem Labormischer angepastet (ca. 50 % Feststoffanteil).

**Vergl. Beispiel 3:** Kommerziell erhältliches Metalure L-55350 (Fa. Eckart)

**Vergl. Beispiel 4:** Kommerziell erhältliches Silvershine S 2100 (Fa. Eckart), hergestellt gemäß der DE 103 15 775.

**Vergl. Beispiel 5:** Kommerziell erhältliches VP 53534 (Fa. Eckart), Silberdollarpigment für Lack

**Vergl. Beispiel 6:** Kommerziell erhältliches RotoVario 530 080 (Fa. Eckart), Silberdollarpigment für Tiefdruck

**Vergl. Beispiel 7:** Kommerziell erhältliches RotoVario 500 042 (Fa. Eckart), Silberdollarpigment für Tiefdruck

Die Proben der erfindungsgemäßen Beispiele 1 und 2 sowie der Vergleichsbeispiele 3 - 5 wurden zur näheren Bestimmung der Teilchendicken mittels eines Feldionen-Rasterelektronenmikroskops charakterisiert.
Für die Bestimmung der Dickenverteilung mittels REM wurden die Proben folgendermaßen präpariert:

a) Erfindungsgemäße Aluminiumpigmente und herkömmliche Pigmente aus Nassmahlung (Beispiele 1 und 2 sowie Vergleichsbeispiele 4 und 5):

Die erfindungsgemäßen Aluminiumpigmente bzw. die herkömmlichen, aus einer üblichen Nassvermahlung erhaltenen Aluminiumpigmente, die jeweils als Paste oder Filterkuchen vorliegen, werden jeweils zunächst mit Aceton gewaschen und dann ausgetrocknet.

Ein in der Elektronenmikroskopie übliches Harz, beispielsweise TEMPFIX (Gerhard Neubauer Chemikalien, D-48031 Münster, Deutschland), wird auf einen Probenteller aufgebracht und auf einer Heizplatte bis zum Erweichen erhitzt. Nachfolgend wird der Probenteller von der Heizplatte genommen und das jeweilige Aluminiumpulver auf das erweichte Harz gestreut. Das Harz wird durch die Abkühlung wieder fest und die aufgestreuten Aluminiumpigmente können - bedingt durch das Wechselspiel zwischen Adhäsion und Schwerkraft - nahezu senkrecht stehend und fixiert auf dem Probenteller präpariert werden. Dadurch sind die Pigmente im Elektronenmikroskop seitlich gut zu vermessen. Bei der Vermessung der Dicke wird der azimuthale Winkel α des Pigmentes zu einer zur Oberfläche normalen Ebene geschätzt und bei der Dickenauswertung nach der Formel

$$h_{eff} = h_{mess}/cos\alpha$$

berücksichtigt. Von den $h_{eff}$-Werten wurde anhand der relativen Häufigkeiten die Summenverteilungskurve erstellt. Es wurden jeweils 100 Teilchen ausgezählt.

b) PVD-Pigmente (Vergleichsbeispiel 3)

Eine PVD-Pigmentsuspension wurde mit einem großen Überschuss Aceton mehrmals gewaschen, um sie weitgehend von Resten des release-coats zu befreien. Anschließend wurden die PVD-Pigmente in Aceton dispergiert und ein Tropfen der Dispersion auf ein Mikroskopiegläschen verteilt. Nach dem Verdunsten des Lösemittels wird das Glas zerschnitten. Die einzelnen Scherben können senkrecht stehend in das Elektronenmikroskop eingespannt werden. Bei scharfen Bruchkanten können genügend PVD-Pigmente vermessen werden. Es wurden ebenfalls 100 Teilchen ausgezählt.

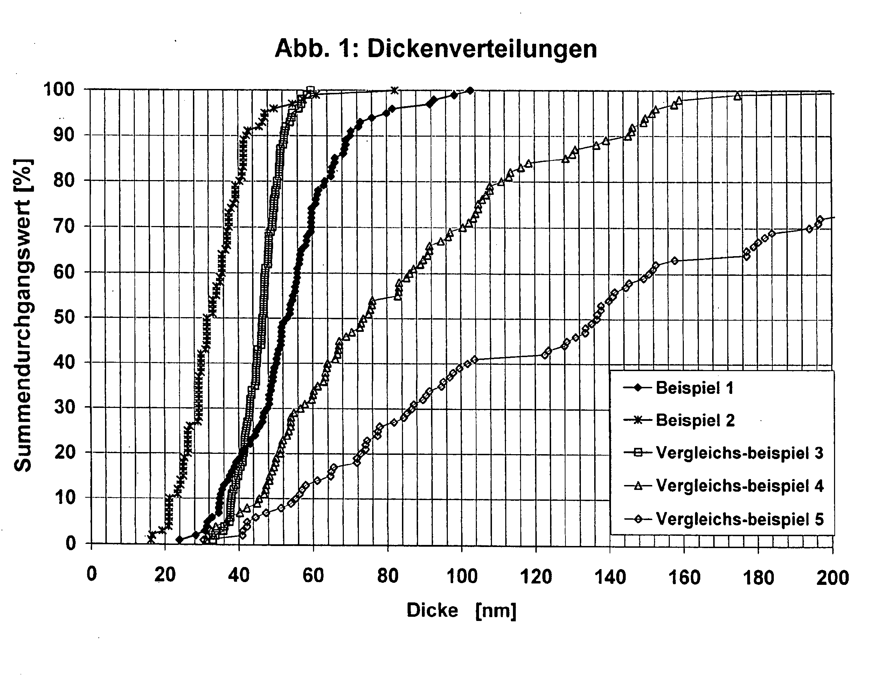

Die Summendurchgangsverteilungen der Dickenverteilung des erfindungsgemäßen Beispiels und der Vergleichs-Beispiele 3 - 5 sind in Abb.1 dargestellt. Statistische Analysen ergaben, dass die Summendurchgangskurve ab 75 bis 100 Teilchen für die erfindungsgemäßen Pigmente und konventionelle Pigmente aus der Nassmahlung weitgehend konstant war.

Aus der nachfolgenden Tab. 1 sind die $d_{10}$-, $d_{50}$- und $d_{90}$-Werte sowie daraus berechnete Span-Werte der Größenverteilung (Cilas), die entsprechenden Kennwerte der Dickenmessung aus REM-Untersuchungen, die daraus berechneten Span-Durchmesser/-Dicken, die Formfaktoren f der Pigmente sowie die aktiven Metallgehalte zu entnehmen.

Die Längsausdehnung d wurde mit Hilfe eines Lasergranulometers (Cilas 1064, Firma Cilas, Frankreich) bestimmt und als Maß der mittleren Längsausdehnung wie üblich der $d_{50}$-Wert der Summendurchgangsverteilung in μm gewählt.

Die Pigmente von Beispiel 1 und des vergleichenden Beispiels 3 wurden einer Röntgendiffraktometrischen Untersuchung unterzogen. Gemessen wurde mit einem Pulverdiffraktometer der Firma Thermoelektron (produziert in Ecoblens, Schweiz) vom Typ X'tron. Als Röntgenquelle wurden eine Kupferöhre verwendet und die Cu-K$_{\alpha1,2}$-Linie zur Anregung verwendet. Das Gerät wies eine Bragg-Brentano-Meßgeometrie auf.

Zur Probenpräparation wurden die Pigmente mit Aceton ausgewaschen, sodann wurden einige Tropfen der Pigment-Aceton-Dispersion auf einen Drehteller aufgebracht und bei Raumtemperatur getrocknet. Auf diese Weise orientierten sich die Pigmente weitgehend parallel zur Unterlage.

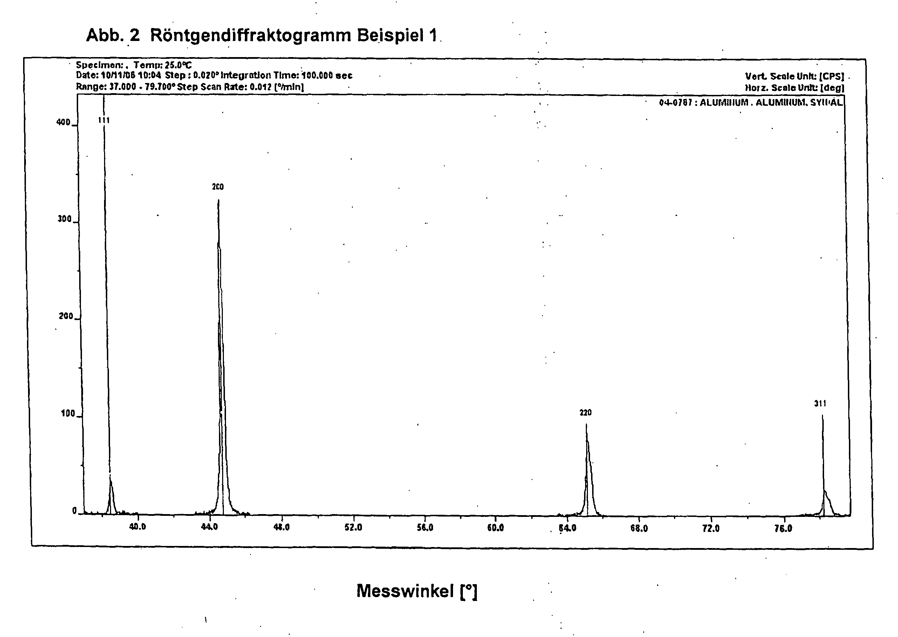

In den Abb. 2 - 3 sind die entsprechenden Diffraktogramme dargestellt. Die Intensität der gemessenen Röntgenstrahlung ist als Funktion des Meßwinkels dargestellt. Linien markieren die Positionen der gemäß der ICDD-(International Centre for Diffraction Data) zu erwartenden Reflexe bestimmter kristallographischer Ebenen.

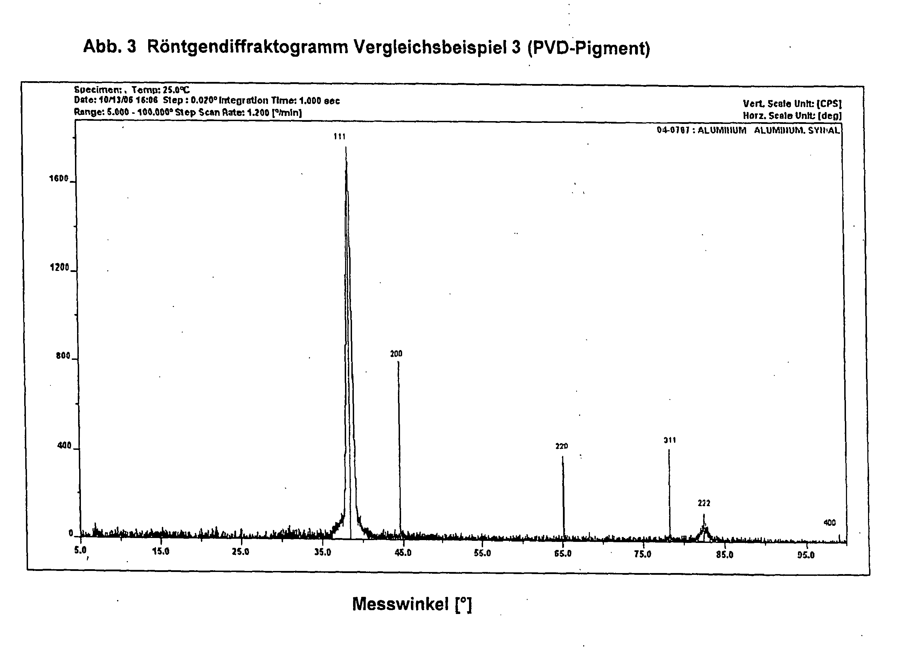

Die Messzeit zur Aufnahme eines Diffraktogramms betrug mehrere Stunden. Deutlich zu erkennen ist, dass das Spektrum des Vergleichsbeispiels 3 (PVD-Pigmente, Abb. 3) nennenswerte Peaks lediglich bei den [111]- Ebenen und [222]-Ebenen aufweist. Der Reflex der [222]-Ebene ist die höhere Ordnung der [111]-Ebene und erscheint deutlich schwächer. Diese Befunde deuten auf eine weitgehend einkristalline Struktur des Pigmentes, wobei die dicht gepackte [111]-Ebene parallel zur Plättchenoberfläche vorliegt.

Abb. 2 ist zu entnehmen, dass das Röntgendiffraktogramm des erfindungsgemäßen Beispiels einen deutlich ausgeprägten Hauptpeak bei der [200]-Ebene besitzt. Ferner sind Signale entsprechend der [220] und - deutlich schwächer - der [111]- und der [311]-Ebene zu erkennen. Die Intensität aller Signale ist trotz längerer Integrationszeit deutlich schwächer als beim PVD-Pigment. Demgemäß ist der kristalline Charakter dieses Pigmentes aus der Nassmahlung insgesamt deutlich schwächer ausgeprägt. Diese Reflexe sind charakteristisch für ein Aluminiumpigment im Zustand der plastischen Verformung und reflektieren daher den physikalischen Zustand eines Aluminiumpigmentes während oder nach einem Vermahlungsvorgang.

**Tabelle 1: Physikalische Charakterisierung**

| Probe | Längenausdehnung | | | Span Längenausdehnung [(d$_{90}$-d$_{10}$)/d$_{50}$] | Teilchendickenverteilung aus REM | | | Span Dicke [(h$_{90}$-h$_{10}$)/h$_{50}$] | Formfaktor | Aktiver Metallgehalt [%] |
|---|---|---|---|---|---|---|---|---|---|---|
| | D$_{10}$ | d$_{50}$ [μm] | d$_{90}$ | | h$_{10}$ | h$_{50}$ [nm] | h$_{90}$ | | | |
| Beispiel 1 | 7,1 | 13,0 | 20,0 | 0,99 | 35 | 54 | 70,2 | 0,67 | 245 | 87 |
| Beispiel 2 | 5,1 | 9,2 | 14,2 | 0,99 | 22 | 32 | 43 | 0,65 | 288 | 81 |
| Vergl. Beispiel 3 | 5,7 | 12,7 | 20,7 | 1,18 | 38 | 47 | 52 | 0,31 | 270 | - |
| Vergl. Beispiel 4 | 11,3 | 20,1 | 32,4 | 1,05 | 46 | 74 | 145 | 1,36 | 272 | 95 |
| Vergl. Beispiel 5 | 9,8 | 17,2 | 26,9 | 0,99 | 55 | 137 | 330 | 2,01 | 126 | 97 |
| Vergl. Beispiel 6 | 6,0 | 11,5 | 20,5 | 1,26 | | 159 | | - | 72 | 92 |
| Vergl. Beispiel 7 | 7,3 | 15,7 | 26,6 | 1,23 | | - | | - | - | 96 |

In nachfolgender Tab. 2 sind die farbmetrischen Daten von Nasslackierungen an ausge Beispielen dargestellt.

Die Rückseitenapplikationen in Tab. 2 wurden mit Hilfe einer Tiefdruckfarbe auf Basis eines kommerziell erhältlichen Polyvinylbutyrals durch Bedrucken einer MELINEX 400 Folie (PET-Folie, 50 μm) zum einen mittels einer Rakel mit einer Rillentiefe von 24 μm und zum anderen mittels einer Druckmaschiene (Druckmaschine: Rotova 300, Fa. Rotocolor, 3 Farbwerke; Druckgeschwindigkeit 100 m/min, Viskosität 15 s DIN-4-Auslaufbecher; 70 Linien/cm; Pigmentierungshöhe je nach Teilchendicke zwischen 3,5% (Beispiel 3) und 14,5% (Beispiel 7)) erstellt.

Die Rückseitenapplikationen wurden optisch durch eine Glanzmessung bei 60° in Anlehnung an die DIN 67 530 (Gerät: micro-TRI-gloss von Byk-Gardner, D-82538 Geretsried, Deutschland) charakterisiert. Kalibriert wurde hier mittels Dunkelkalibrierung sowie einer schwarzen Spiegelglasplatte mit Werten von 92 für 60°.

Die Bewertung der in üblicher Art und Weise bei 60° erfolgten Glanzmessung ergibt, dass die nach den erfindungsgemäßen Beispielen 1 und 2 hergestellten Pigmente einen weitaus höheren Glanz als konventionelle Pigmente aus der konventionellen Nassvermahlung (siehe Vergl.-Beispiele 6 und 7) aufweisen.

Auch der der visuelle Eindruck der gemäß den erfindungsgemäßen Beispielen 1 und 2 hergestellten Pigmente ist durch einen sehr stark metallischen Spiegeleffekt - ähnlich wie bei PVD-Pigmenten (siehe Vergl.-Beispiel 3) - geprägt. -

Der Glanz der erfindungsgemäßen Pigmente in dieser Applikation entspricht in etwa dem Glanz von PVD-Pigmenten (siehe Vergl.-Beispiel 3).

Bei den Vergleichsbeispielen 4 und 5 konnten die Rückseitenapplikation durch Bedruckung im Tiefdruck nicht befriedigend durchgeführt werden. Die Pigmente wiesen aufgrund ihrer Teilchengröße ein im Tiefdruckverfahren unzureichendes Transferverhalten auf. Lediglich mittels einer Rakel konnten Rückseitenapplikationen erhalten werden. Die Rakeltechnik ist jedoch für kommerzielle Zwecke meist nicht einsetzbar. Mit den aufgerakelten Applikationen konnte im Fall des Vergleichsbeispiels 4 ebenfalls ein hoher Glanz und metallischer Effekt erzielt werden, jedoch kein Spiegeleffekt.

Die durch die Vergleichsbeispiele 5 und 6 repräsentierten konventionellen Silberdollarpigmente für den Tiefdruck weisen einen sehr viel geringeren Glanz auf und erreichen nicht annähernd den Spiegeleffekt der Beispiele 1 und 2 oder von Vergleichsbeispiel 3.

Die Ergebnisse der Farbmetrik belegen, dass die erfindungsgemäßen Pigmente - ähnlich wie PVD-Pigmente - aufgrund ihrer sehr geringen Dicke und geringen Dickenverteilung eine äußerst gute Orientierung und damit eine sehr hohe gerichtete Reflektion, d.h. einen hohen 60°-Glanzgrad, aufweisen.

**Tab. 2: Rückseitenapplikation MELINEX Folie**

| Probe | Rückseitenapplikation durch Druck | | Rückseitenapplikation durch Rakel | |
|---|---|---|---|---|
| | Glanz 60° | Visueller Eindruck | Glanz 60° | Visueller Eindruck |
| Erf.-gem. Beispiel 1 | 643 | sehr stark metallisch, "Spiegeleffekt" | 619 | sehr stark metallisch "Spiegeleffektt" |
| Erf.-gem. Beispiel 2 | 660 | sehr stark metallisch, "Spiegeleffekt" | 650 | sehr stark metallisch, "Spiegeleffekt" |
| Vergl.-Beispiel 2 | 677 | sehr stark metallisch "Spiegeleffektf" | 672 | sehr stark metallisch "Spiegeleffektt" |
| Vergl.-Beispiel 3* | - | - | 504 | metallisch |
| Vergl.-Beispiel 4* | - | - | 366 | metallisch, weiß |
| Vergl.-Beispiel 5 | 494 | metallisch | 445 | metallisch |
| Vergl.-Beispiel 6 | 339 | metallisch , weiß | 267 | metallisch, weiß |
| * Diese Proben ließen sich nicht applizieren, da das Transferverhalten nicht ausreichend war. | | | | |

Beispiele zur Passivierung der erfindungsgemäßen Aluminiumpigmente:

**Beispiel 8:** ($SiO_2$- beschichtetes Aluminium):

55,1 g einer Paste mit Aluminiumpigmenten nach Beispiel 1 (entspricht 38,5 g Al) wurden in 375 ml Isopropanol dispergiert und auf Siedetemperatur gebracht. Es wurden 13,35 g Tetraethoxysilan zugegeben. Anschließend dosierte man über einen Zeitraum von 3 h eine Lösung von 5,4 g 25 %-igen $NH_3$ in 9,3 g Wasser hinzu. Nach weiteren 3 h wurde auf Raumtemperatur abgekühlt und die Suspension über einen Büchnertrichter abgenutscht. Anschließend wurde das Produkt über Nacht in einem Vakuumtrockenschrank bei 100°C getrocknet.

Beispiel 9: (Chromatiertes Aluminium)

18 g einer Chromsäurelösung wurden hergestellt, indem man 4,5g $CrO_3$ in 13,5 g vollentsalztes Wasser auflöst.

In einem 1 L-Reaktor wurden 220g vollentsalztes Wasser auf 90°C aufgeheizt. Unter heftigem Rühren (Rühraggregat: Stollenscheibe) gab man zunächst 21g Butylglykol und anschließend 125g des in Beispiel 1 beschriebenen Aluminiumpigmentes in Form einer Testbenzinpaste mit einem Festkörperanteil von 70%, hinzu. Wenige Minuten später erfolgte die Zugabe der Chromsäurelösung bei einer Reaktionstemperatur von 80°C. Man lässt unter starkem Rühren das Gemisch weitere 50 min lang reagieren. Dann lässt man 30 min lang abkühlen und dekantiert in einem Becherglas das Reaktionsgemisch mehrmals mit je 250ml einer 5%igen VE-$H_2O$/Butylglykol-Lösung, bis keine Gelbfärbung der überstehenden Lösung mehr auftritt. Anschließend wird das Produkt auf einer Nutsche abfiltriert und mit viel ca. 3l Wasser gewaschen.

Gasungstest:

8,6 g Al wurden in Form einer Paste in 315 g eines kommerziell erhältlichen, farblosen Wasser-Mischlacks eingearbeitet und mit Dimethanolethanolamin auf einen pH-Wert = 8,2 eingestellt. Von diesem Lack wurden 300 g in eine Gaswaschflasche eingefüllt und diese mit einem Doppelkammergasblasenzähler verschlossen. Die Gasmenge wurde anhand der verdrängten Wassermenge in der unteren Kammer des Gasblasenzählers bestimmt. Die Gaswaschflasche wurde in einem Wasserbad bei 40°C temperiert und der Test über 30 Tage durchgeführt. Er galt als bestanden, wenn nach 7 d nicht mehr als 4 und nach 30 Tagen nicht mehr als 20 ml Wasserstoff entwickelt wurden.

**Tab. 3: Ergebnisse Gasungstest von beschichteten dünnen Aluminiumpigmenten**

| Probe | Gasung nach 7d | Gasung nach 30d |
|---|---|---|
| Beispiel 8 | 1 ml | 7 ml |
| Beispiel 9 | 1 ml | 4 ml |
| Vergl.-Beispiel (unbeschichtetes Pigment nach Bsp. 1)... | < 3 h !! | - |
| d: Tage | | |

Aus Tab. 3 ist zu entnehmen, dass die erfindungsgemäßen Aluminiumpigmente hervorragend gegenüber Korrosion stabilisiert werden können.

**Beispiel 10** (Nagellack):

Ein Aluminiumgrieß wurde wie in Beispiel 1 angeführt verdüst und nachfolgend vermahlen. Als Schmiermittel wurde hierbei pflanzliche Ölsäure verwendet. Das Pigment wurde fünfmal über einen Büchnertrichter mit Isopropanol gewaschen, um Reste von Testbenzin aus der Nassmahlung zu entfernen.

Anschließend wurden aus diesem Pigment wie auch aus Vergleichsbeispiel 3 Nagellacke folgender Zusammensetzung hergestellt:

**Tab. 4: Nagellackformulierungen:**

| Nr. | Stoff | Beispiel 10 | Vergleichsbeispiel 11 |
|---|---|---|---|
| 1 | | Metallpigment aus Beispiel 10 19 Gew.-% | Metalure® CA-41010 AE* |
| 2 | Methylethylketon | 21 Gew.-% | 21 Gew.-% |
| 3 | Methylisobutylketon | 20 Gew.-% | 20 Gew.-% |
| 4 | CAB 381.2 | 8 Gew.-% | 8 Gew.-% |
| 5 | Butylacetat 98/100 | 32 Gew.-% | 32 Gew.-% |
| * Kommerziell erhältliches PVD-Pigment für kosmetische Zwecke (Vertrieb: Fa. Eckart) | | | |

Die Nagellacke gemäß Beispiel 10 und dem vergleichenden Beispiel 11 wurden auf einen künstlichen Fingernagel aufgetragen. Beide Applikationen zeigten einen hochglänzend silbrig, geschlossener Metallfilm ähnlich einem "flüssigen Metall". Hierbei wies das Vergleichsbeispiel 11 jedoch einen etwas höheren Glanz auf.

Die Erfindung betrifft Aluminiumpigmente, die in ihren physikalischen Eigenschaften PVD-Pigmenten sehr nahe kommen, jedoch auf wesentlich einfachere Art und Weise hergestellt werden können. Schließlich weisen die erfindungsgemäßen Aluminiumpigmente nicht die bei PVD-Pigmenten nachteilige Agglomerationsneigung auf. Gegenüber den konventionellen Aluminiumpigmenten weisen die erfindungsgemäßen Aluminiumpigmente, insbesondere im Hinblick auf die Deckfähigkeit und den Glanz deutlich verbesserte Eigenschaften auf. Insbesondere weisen die erfindungsgemäßen Aluminiumpigmente bei der Rückseitenapplikation im Druckbereich Eigenschaften vergleichbar mit PVD-Pigmenten auf. Dies wurde bisher durch Pigmente aus der Nassvermahlung noch nicht erreicht.

## Patentansprüche

1. Plättchenförmige Aluminiumpigmente mit enger Dickenverteilung, welche wenigstens teilweise mit Schmiermittel belegt sind, **dadurch gekennzeichnet, dass** sie

   a) eine über Dickenauszählung mit Rasterelektronenmikroskopie ermittelte mittlere Dicke $h_{50}$ von 15 bis 75 nm,
   b) eine über Dickenauszählung mit Rasterelektronenmikroskopie ermittelte relative Breite der Dickenverteilung $\Delta h$, welche anhand der entsprechenden Summendurchgangskurve der relativen Häufigkeiten nach der Formel $\Delta h = 100 \times (h_{90} - h_{10}) / h_{50}$, berechnet wird, von 30 % bis weniger als 70% und
   c) ein Röntgendiffraktogramm, welches an Pigmenten in im wesentlichen planparalleler Anordnung gemessen wurde, mit ein oder zwei Hauptpeaks, die nicht den [111]-Reflexen entsprechen,
   aufweisen.

2. Plättchenförmige Aluminiumpigmente nach Anspruch 1,
   **dadurch gekennzeichnet,**
   **dass** die Aluminiumpigmente durch Mahlverfahren hergestellt werden.

3. Plättchenförmige Aluminiumpigmente nach Anspruch 1 oder 2,
   **dadurch gekennzeichnet,**
   **dass** die Aluminiumpigmente eine relative Breite der Dickenverteilungen $\Delta h$ von 35 % bis 65 % aufweisen.

4. Plättchenförmige Aluminiumpigmente nach einem der vorherigen Ansprüche,
   **dadurch gekennzeichnet,**
   **dass** die Aluminiumpigmente einen Formfaktor $d_{50}/h_{50}$ von 200 - 1500 aufweisen.

5. Plättchenförmige Aluminiumpigmente nach einem der vorherigen Ansprüche,
   **dadurch gekennzeichnet,**
   **dass** sie im Röntgendiffraktogramm ein oder zwei Peaks maximaler Intensität aufweisen, die den [200]- und/oder [220]-Reflexen zuzuordnen sind.

6. Plättchenförmige Aluminiumpigmente nach einem der vorherigen Ansprüche,
   **dadurch gekennzeichnet,**
   **dass** die Aluminiumpigmente mit einer passivierenden Inhibitor- oder Korrosionsschutzschicht belegt sind.

7. Plättchenförmige Aluminiumpigmente nach Anspruch 6,
   **dadurch gekennzeichnet,**
   **dass** die passivierende Korrosionsschutzschicht Siliziumoxid, Zirkoniumoxid, Aluminiumoxid, Chromoxid, polymerisierte Kunststoffharze, Vanadiumoxide, Molybdänoxide und/oder -peroxide, Phosphate, Phosphite, Borate oder Mischungen oder Kombinationen derselben umfasst.

8. Verfahren zur Herstellung von plättchenförmigen Aluminiumpigmenten nach einem der Ansprüche 1 bis 7,
   **dadurch gekennzeichnet,**
   das es folgende Schritte umfasst:

   a) Bereitstellen eines Aluminiumgrießes mit einer Korngrößenverteilung, welche einen $d_{Grieß,10} < 3,0\ \mu m$, einen $d_{Grieß,50} < 5,0\ \mu m$ und einen $d_{Grieß,90} < 8,0\ \mu m$ aufweist,
   b) Vermahlen des Aluminiumgrießes unter a) unter Verwendung eines Mahlwerks in Gegenwart von Lösemittel und Schmierstoffen und Mahlkörpern, die ein Einzelgewicht von 1,2 bis 13 mg aufweisen, für eine Mahldauer von 15 bis 100 h.

9. Verfahren nach Anspruch 8,
   **dadurch gekennzeichnet,**
   **dass** die Mahlkörper ein Einzelgewicht von 5,0 bis 12 mg aufweisen.

10. Verfahren nach Anspruch 8 oder 9,
    **dadurch gekennzeichnet,**
    **dass** der Aluminiumgrieß, der nach Schritt a) hergestellt wird, eine Korngrößenverteilung, umfassend einen $d_{Grieß,10}$ < 0,6 $\mu$m, einen $d_{Grieß,50}$ < 2,0 $\mu$m und einen $d_{Grieß,90}$ < 4,0 $\mu$m, aufweist.

11. Verwendung von Aluminiumpigmenten nach einem der Ansprüche 1 bis 7 in Coatings, Lacken, Druckfarben, Pulverlacken, Kunststoffen, Sicherheitsdrucken, Keramiken und kosmetischen Formulierungen, vorzugsweise Nagellack.

12. Verwendung von Aluminiumpigmenten nach Anspruch 11 in Tief-, Flexo-und/oder Siebdrucken.

13. Verwendung von Aluminiumpigmenten nach Anspruch 12 zur Herstellung von Rückseitenapplikationen.

14. Verwendung von beschichteten Aluminiumpigmenten nach einem der Ansprüche 6 bis 7 in Wasserlacken und Beschichtungsmitteln für Außenanwendungen.

15. Druckfarbe, **dadurch gekennzeichnet, dass** sie Aluminiumpigmente nach einem der Ansprüche 1 bis 7 enthält.

**Claims**

1. Platelet-shaped aluminium pigments with a narrow thickness distribution, at least partially coated with lubricant, **characterised in that** they have

   a) a mean thickness $h_{50}$ of 15 to 75 nm determined by means of a thickness count using raster electron microscopy,
   b) a relative width of the thickness distribution $\Delta h$ of 30 % to less than 70 % determined by means of a thickness count using raster electron microscopy calculated on the basis of the corresponding cumulative passage curve of the relative frequencies using the formula $\Delta h = 100x(h_{90}-h_{10}) / h_{50}$ and
   c) an X-ray diffractogram measured on pigments in an essentially plane-parallel orientation having one or two mean peaks which do not correspond to the [111]-reflexes.

2. Platelet-shaped aluminium pigments as claimed in claim 1,
   **characterised in that**
   the aluminium pigments are produced by grinding processes.

3. Platelet-shaped aluminium pigments as claimed in claim 1 or 2,
   **characterised in that**
   the aluminium pigments have a relative width of the thickness distributions $\Delta h$ of 35 % to 65 %.

4. Platelet-shaped aluminium pigments as claimed in one of the preceding claims,
   **characterised in that**
   the aluminium pigments have a form factor $d_{50}/h_{50}$ of 200 - 1500.

5. Platelet-shaped aluminium pigments as claimed in one of the preceding claims,
   **characterised in that**
   they have one or two peaks of maximum intensity in the X-ray diffractogram which can be attributed to the [200]- and/or [220]-reflexes.

6. Platelet -shaped aluminium pigments as claimed in one of the preceding claims,
   **characterised in that**

the aluminium pigments are coated with a passivating inhibitory coating or anti-corrosion coating.

7.  Platelet-shaped aluminium pigments as claimed in claim 6,
    **characterised in that**
    the passivating anti-corrosion coating comprises silicon oxide, zirconium oxide, aluminium oxide, chromium oxide, polymerised resins, vanadium oxides, molybdenum oxides and/or peroxides, phosphates, phosphites, borates or mixtures or combinations thereof.

8.  Method of producing platelet-shaped aluminium pigments as claimed in one of claims 1 to 7,
    **characterised in that**
    it comprises the following steps:

    a) preparing an aluminium shot with a particle size distribution having a $d_{shot.10} < 3.0$ $\mu$m, a $d_{shot.50} < 5.0$ and a $d_{shot.90} < 8.0$ $\mu$m,
    b) grinding the aluminium shot prepared under a) using a grinder in the presence of solvents and lubricants and grinding media with an individual weight of 1.2 to 13 mg for a grinding time of 15 to 100 h.

9.  Method as claimed in claim 8,
    **characterised in that**
    the grinding media have an individual weight of 5.0 to 12 mg.

10. Method as claimed in claim 8 or 9,
    **characterised in that**
    the aluminium shot produced as defined in step a) has a grain size distribution comprising a $d_{shot.10} < 0.6$ $\mu$m, a $d_{shot.50} < 2.0$ $\mu$m and a $d_{shot.90} < 4.0$ $\mu$m.

11. Use of aluminium pigments as claimed in one of claims 1 to 7 in coatings, varnishes, printing inks, powder coatings, plastics, security inks, ceramics and cosmetic formulations, preferably nail varnish.

12. Use of aluminium pigments as claimed in claim 11 in gravure, flexographic and/or screen printing.

13. Use of aluminium pigments as claimed in claim 12 for producing reverse applications.

14. Use of coated aluminium pigments as claimed in one of claims 6 to 7 in water-based varnishes and coating agents for outdoor applications.

15. Printing ink **characterised in that** it contains aluminium pigments as claimed in one of claims 1 to 7.


**Revendications**

1.  Pigments d'aluminium en forme de plaquettes à distribution d'épaisseur étroite, revêtus au moins en partie avec des lubrifiants, **caractérisés en ce qu'**ils présentent

    a) une épaisseur moyenne $h_{50}$, déterminée par décompte des épaisseurs par microscopie électronique à balayage, de 15 à 75 nm,
    b) une largeur relative de la distribution d'épaisseur $\Delta$h, déterminée par décompte des épaisseurs par microscopie électronique à balayage, qui est calculée à partir de la courbe des tamisats cumulés correspondante des fréquences relatives selon la formule $\Delta h = 100x(h_{90}-h_{10})/h_{50}$, de 30 % à moins de 70 %, et
    c) un diffractogramme de rayons X, qui a été mesuré sur des pigments en un agencement essentiellement coplanaire, comprenant un ou deux pics principaux qui ne correspondent pas aux réflexions [111].

2.  Pigments d'aluminium en forme de plaquettes selon la revendication 1, **caractérisés en ce que** les pigments d'aluminium sont fabriqués par des procédés de broyage.

3.  Pigments d'aluminium en forme de plaquettes selon la revendication 1 ou 2, **caractérisés en ce que** les pigments d'aluminium présentent une largeur relative des distributions d'épaisseur $\Delta$h de 35 % à 65 %.

**4.** Pigments d'aluminium en forme de plaquettes selon l'une quelconque des revendications précédentes, **caractérisés en ce que** les pigments d'aluminium présentent un facteur de forme $d_{50}/h_{50}$ de 200 à 1 500.

**5.** Pigments d'aluminium en forme de plaquettes selon l'une quelconque des revendications précédentes, **caractérisés en ce qu'**ils présentent sur le diffractogramme de rayons X un ou deux pics d'intensité maximale qui sont attribués aux réflexions [200] et/ou [220].

**6.** Pigments d'aluminium en forme de plaquettes selon l'une quelconque des revendications précédentes, **caractérisés en ce que** les pigments d'aluminium sont revêtus avec une couche passivante inhibitrice ou anticorrosion.

**7.** Pigments d'aluminium en forme de plaquettes selon la revendication 6, **caractérisés en ce que** la couche passivante anticorrosion comprend de l'oxyde de silicium, de l'oxyde de zirconium, de l'oxyde d'aluminium, de l'oxyde de chrome, des résines artificielles polymérisées, des oxydes de vanadium, des oxydes et/ou peroxydes de molybdène, des phosphates, des phosphites, des borates ou leurs mélanges ou combinaisons.

**8.** Procédé de fabrication de pigments d'aluminium en forme de plaquettes selon l'une quelconque des revendications 1 à 7, **caractérisé en ce qu'**il comprend les étapes suivantes :

a) la préparation d'une poudre d'aluminium ayant une distribution des tailles de grains qui présente un $d_{poudre, 10} < 3,0 \ \mu m$, un $d_{poudre, 50} < 5,0 \ \mu m$ et un $d_{poudre, 90} < 8,0 \ \mu m$,
b) le broyage de la poudre d'aluminium de a) en utilisant un outil de broyage en présence de solvants et de lubrifiants et de corps de broyage qui présentent un poids individuel de 1,2 à 13 mg, pendant une durée de broyage de 15 à 100 h.

**9.** Procédé selon la revendication 8, **caractérisé en ce que** les corps de broyage présentent un poids individuel de 5,0 à 12 mg.

**10.** Procédé selon la revendication 8 ou 9, **caractérisé en ce que** la poudre d'aluminium qui est fabriquée selon l'étape a) présente une distribution des tailles de grains qui comprend un $d_{poudre, 10} < 0,6 \ \mu m$, un $d_{poudre, 50} < 2,0 \ \mu m$ et un $d_{poudre, 90} < 4,0 \ \mu m$,

**11.** Utilisation de pigments d'aluminium selon l'une quelconque des revendications 1 à 7 dans des revêtements, des laques, des encres d'impression, des laques en poudre, des plastiques, des encres de sécurité, des céramiques et des formulations cosmétiques, de préférence des vernis à ongles.

**12.** Utilisation de pigments d'aluminium selon la revendication 11 en héliogravure, flexographie et/ou sérigraphie.

**13.** Utilisation de pigments d'aluminium selon la revendication 12 pour la fabrication d'applications au verso.

**14.** Utilisation de pigments d'aluminium revêtus selon l'une quelconque des revendications 6 à 7 dans des laques aqueuses et des agents de revêtement pour applications extérieures.

**15.** Encre d'impression, **caractérisée en ce qu'**elle contient des pigments d'aluminium selon l'une quelconque des revendications 1 à 7.

Abb. 1: Dickenverteilungen

## Abb. 2 Röntgendiffraktogramm Beispiel 1

Specimen: , Temp: 25.0°C
Date: 10/11/06 10:04 Step : 0.020° Integration Time: 100.000 sec
Range: 37.000 - 79.700° Step Scan Rate: 0.012 [°/min]

Vert. Scale Unit: [CPS]
Horz. Scale Unit: [deg]

04-0787 : ALUMIUUM . ALUMINUM, SYIIAL

**Messwinkel [°]**

EP 2 102 294 B1

## Abb. 3 Röntgendiffraktogramm Vergleichsbeispiel 3 (PVD-Pigment)

EP 2 102 294 B1

Messwinkel [°]

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19635085
- DE 10001437
- US 4318747 A
- EP 1621586 A1
- EP 1080810 B1
- EP 1424371 A1
- DE 10315775 A1

- WO 2005118722 A1
- DE 19520312 A1
- DE 202004005921 U1
- WO 0236695 A
- WO 0236697 A
- DE 10315775

**In der Beschreibung aufgeführte Nicht-Patentliteratur**

- **J. SEUBERT ; A. FETZ.** PVD Aluminium Pigments: Superior Brillance for Coatings and Graphic Arts. *Coatings Journal,* Juli 2001, vol. 84, 240-245